# EUROPEAN PATENT APPLICATION

(11) **EP 4 808 196 A1**
(43) Date of publication of application: **16.09.2026**
(21) Application number: 23958269.5
(22) Date of filing: 08.11.2023
(51) Int. Cl.: H04W 24/10, H04W 72/23

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/040256
(87) International publication number: WO 2025/099867

(57) **Abstract**

A terminal according to one aspect of the present disclosure includes a receiving section that receives a configuration of a channel state information (CSI) report indicating a plurality of channel measurement resources and one or more interference measurement resources, and a control section that reports the CSI report including a plurality of CSI reference signal resource indicators (CRIs), based on the configuration.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)", "5G+ (plus)", "6th generation mobile communication system (6G)", "New Radio (NR)", "3GPP Rel. 15 (or later versions)", and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

For future radio communication systems (for example, NR), it is studied that a terminal (User Equipment (UE)) controls transmission and reception processing, based on information related to quasi-co-location (QCL, a Transmission Configuration Indication (TCI) state, a beam).

However, measurement/reporting of a number of channel state information-reference signal (CSI-RS) resources for management of a number of beams has not been sufficiently studied. Unless studies on such measurement/reporting is sufficient, degradation in communication quality, throughput reduction, and the like may occur.

In view of this, the present disclosure has one object to provide a terminal, a radio communication method, and a base station that efficiently use CSI-RS resources.

### Solution to Problem

A terminal according to one aspect of the present disclosure includes a receiving section that receives a configuration of a channel state information (CSI) report indicating a plurality of channel measurement resources and one or more interference measurement resources, and a control section that reports the CSI report including a plurality of CSI reference signal resource indicators (CRIs), based on the configuration.

### Advantageous Effects of Invention

According to one aspect of the present disclosure, a plurality of CSI-RS resources can be appropriately measured/reported.

### Brief Description of Drawings

[FIG. 1] FIG. 1 is a diagram to show an example of CSI-RS locations in a slot.
[FIG. 2] FIG. 2A to FIG. 2D are diagrams to show examples of an FD-OCC and a TD-OCC.
[FIG. 3] FIG. 3 is a diagram to show an example of CSI-RS locations for each number of ports.
[FIG. 4] FIG. 4 is a diagram to show an example of mapping of a CSI-RS having 32 ports.
[FIG. 5] FIG. 5 shows association between the number of supported CSI-RS ports and a base station antenna layout for a single panel of an existing specification.
[FIG. 6] FIG. 6 shows association between the number of supported CSI-RS ports and a base station antenna layout for a multi-panel of an existing specification.
[FIG. 7] FIG. 7 shows a first part of an example of a table C-1 indicating a field size of the PMI.
[FIG. 8] FIG. 8 shows a second part of an example of the table C-1 indicating the field size of the PMI.
[FIG. 9] FIG. 9 shows an example of a table C-3 indicating field sizes of RI/LI/CQI/CRI.
[FIG. 10] FIG. 10 shows an example of a table C-7 indicating a mapping order of CSI fields in wideband CSI reporting.
[FIG. 11] FIG. 11 shows an example of a table C-7A indicating the mapping order of CSI fields in the wideband CSI reporting.
[FIG. 12] FIG. 12 shows an example of a table C-9 indicating a mapping order of CSI fields of the CSI part 1 in subband CSI reporting.
[FIG. 13] FIG. 13 shows an example of a table C-10 indicating a mapping order of the CSI fields of a CSI part 2 wideband in the subband CSI reporting.
[FIG. 14] FIG. 14 shows an example of a table C-11 indicating a mapping order of the CSI fields of a CSI part 2 subband in the subband CSI reporting.
[FIG. 15] FIG. 15 shows an example of a table C-7a indicating a mapping order of CSI fields in wideband CSI.
[FIG. 16] FIG. 16 shows an example of a table C-9a indicating a mapping order of the CSI fields in CSI part 1 of a subband CSI.
[FIG. 17] FIG. 17 shows an example of a table C-7b indicating the mapping order of CSI fields in wideband CSI.
[FIG. 18] FIG. 18 is a diagram to show an example of a schematic structure of a radio communication system according to one embodiment.
[FIG. 19] FIG. 19 is a diagram to show an example of a structure of a base station according to one embodiment.
[FIG. 20] FIG. 20 is a diagram to show an example of a structure of a user terminal according to one embodiment.
[FIG. 21] FIG. 21 is a diagram to show an example of a hardware structure of the base station and the user terminal according to one embodiment.
[FIG. 22] FIG. 22 is a diagram to show an example of a vehicle according to one embodiment.

### Description of Embodiments

### (CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-Interference Measurement) (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC).

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be used interchangeably with CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication i₁ may be reported for the entire CSI reporting band, and subband indication (one subband indication) i₂ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be used interchangeably with a single layer, and the multi-beam may be used interchangeably with a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be used interchangeably. In the present disclosure, Type 2 and Type II may be used interchangeably.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

For enabling, for both of FR1 and FR2, more dynamic channel/interference hypotheses for NCJT, assessment and specifications of CSI reporting for DL transmission with at least one of multi-TRP and multi-panel are under study.

### (Codebook Configuration)

The UE is configured with a codebook (CB)-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook out of a plurality of codebooks including a type 1 single-panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) ("...Restriction" in CodebookConfig). Configuration of the CBSR is a bit indicating, for a precoder associated with a CBSR bit, which PMI report is allowed ("1") and which PMI report is not allowed ("0"). 1 bit of a CBSR bitmap corresponds to one codebook index/antenna port.

### (CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesForInterference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of options 1 and 2 below is under study.

### <Option 1>

The UE is configured to report X (X = 0, 1, 2) CSIs associated with single TRP measurement hypotheses and one CSI associated with NCJT measurement. When X = 2, two CSIs are associated with two different single TRP measurements using CMRs of different CMR groups.

### <Option 2>

The UE may be configured to report one CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when options 1 and 2 above are applied to multi-TRP CSI report configuration of Rel. 17 by CSI report configuration, configuration of the following measurement is performed.
Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

A plurality of subbands for CSI report #n indicated and given by a higher layer parameter csi-ReportingBand may be serially numbered in ascending order including the lowest subband of csi-ReportingBand as subband 0.

### (PMI/Type 1 Codebook)

As a type 1 (type I) codebook (Rel. 15), a type 1 single-panel codebook and a type 1 multi-panel codebook are defined for a base station panel. In a type 1 single-panel, an antenna model (antenna configuration) of a CSI antenna port array (logical configuration) is defined for (N₁, N₂). The number P_{CSI-RS} of CSI-RS antenna ports is 2N₁N₂. In type 1 multi-panel, an antenna model of a CSI antenna port array (logical configuration) is defined for the number P_{CSI-RS} of CSI-RS antenna ports and (N_{g}, N₁, N₂).

In the present disclosure, a type 1 codebook, a type 1 single-panel codebook, and a type 1 multi-panel codebook may be used interchangeably.

### - Type 1 Single-Panel Codebook

For Rel-15 type 1 single-panel CSI, a higher layer parameter of a codebook type (subType in type1 in codebookType in CodebookConfig) is set to a type 1 single-panel ('typeI-SinglePanel') for the UE. When the number v of layers ∈ {2, 3, 4} is not satisfied, PMI values correspond to three codebook indices i_{1,1}, i_{1,2}, i₂. When the number v of layers ∈ {2, 3, 4} is satisfied, PMI values correspond to four codebook indices i_{1,1}, i_{1,2}, i_{1,3}, i₂. When the number v of layers ∈ {2, 3, 4} is not satisfied, composite codebook index i₁ = [i_{1,1} i_{1,2}]. When the number v of layers ∈ {2, 3, 4} is satisfied, composite codebook index i₁ = [i_{1,1} i_{1,2} i_{1,3}].

For P_{CSI-RS}, supported configurations (value combinations) of (N₁, N₂) and (O₁, O₂) are defined in a specification. (N1_{,} N₂) indicates the number of two-dimensional (2D) antenna elements, and is configured by a higher layer parameter n1-n2 in moreThanTwo in nrOfAntennaPorts in typeI-SinglePanel. n1-n2 is a bitmap parameter of N₁O₁N₂O₂ bits. (O1_{,} O₂) is a 2D over-sampling factor.

A precoding matrix for v = 1 is represented as W_{l,m,n}^{(v)}. A precoding matrix for v = 2 is represented as W_{l,l',m,m',n}^{(v)}. A precoding matrix for P_{CSI-RS} < 16 and v = 3, 4 is represented as W_{l,l',m,m',n}^{(v)}. A precoding matrix for P_{CSI-RS} ≥ 16 and v = 3, 4 is represented as W_{l,m,p,n}^{(v)}. A precoding matrix for v = 5, 6 is represented as W_{l,l',l",m,m',m",n}^{(v)}. The precoding matrix for v = 7, 8 is represented by W_{l,l',l",l‴,m,m',m",m‴,n}^{(v)}. l, l', l", and l‴ are determined by i_{1,1} and k₁. m, m', m", m‴ are determined by i_{1,2} and k₂. n is determined by i₂. p is 0 for the first half of P_{CSI-RS} (≥ 16) ports, and is 1 for the second half of the ports.

The precoding matrix W can be represented as a product "W₁W₂" of two matrices. W1 indicates a wideband and long-term channel property, and is represented by codebook index i₁ (for example, i_{1,1} and i_{1,2}). W2 indicates a frequency-selective (subband) and short-term channel property, and is represented by codebook index i₂. W1 may be given by the following expression using matrix B. ${W}_{1} = \left[\begin{matrix}B & 0 \\ 0 & B\end{matrix}\right]$

B represents L 2D DFT beams, and each beam is oversampled by (O₁, O₂).

φₙ, θₚ, uₘ, v_{l,m}, v^{~}_{l,m} for the precoding matrix are given by the following expression. $\begin{matrix}{φ}_{n} = {e}^{jπn / 2} \\ {θ}_{p} = {e}^{jπp / 4} \\ {u}_{m} = \left\{\begin{matrix}\left[1 {e}^{j \frac{2 πm}{{O}_{2} {N}_{2}}} … {e}^{j \frac{2 πm \left({N}_{2}-1\right)}{{O}_{2} {N}_{2}}}\right] & {N}_{2} > 1 \\ 1 & {N}_{2} = 1\end{matrix}\right. \\ {ν}_{l , m} = {\left[{u}_{m} {e}^{j \frac{2 πl}{{O}_{1} {N}_{1}}}{u}_{m} … {e}^{j \frac{2 πl \left({N}_{1}-1\right)}{{O}_{1} {N}_{1}}} {u}_{m}\right]}^{T} \\ {{ν}^{˜}}_{l , m} = {\left[{u}_{m} {e}^{j \frac{4 πl}{{O}_{1} {N}_{1}}}{u}_{m} … {e}^{j \frac{4 πl \left({N}_{1}/2-1\right)}{{O}_{1} {N}_{1}}} {u}_{m}\right]}^{T}\end{matrix}$

The codebook for 1-layer CSI reporting and codebook mode (codebookMode) = 1 includes index i_{1,1} = l = 0, 1, ..., N₁O₁ - 1 corresponding to a beam horizontal component, index i_{1,2} = m = 0, 1, ..., N₂O₂ - 1 corresponding to a beam vertical component, and index i₂ = n = 0, 1, 2, 3 corresponding to a subband. A precoding matrix W_{l,m,n}⁽¹⁾ for the 1-layer CSI reporting using antenna ports 3000 to 2999+P_{CSI-RS} is given by the following expression. ${W}_{l , m , n}^{\left(1\right)} = \frac{1}{\sqrt{{P}_{CSI - RS}}} \left[\begin{matrix}{ν}_{l , m} \\ {φ}_{n} {ν}_{l , m}\end{matrix}\right]$

Here, [i_{1,1}, i_{1,2}, i₂] = [l, m, n]. v_{l,m} is a DFT vector (a spatial domain (SD) vector, a 2D-DFT vector, an SD DFT vector, an SD base vector, an SD beam) having N₁ rows and N₂ columns, is expressed by exp(j2πln₁/O₁N₁)×exp(j2πmn₂/O₂N₂), n₁ = 0, 1, ..., N₁ - 1, and n₂ = 0, 1, ..., N₂ - 1, and is identified by v, l. vl_{,m} indicates one beam. It is a phase difference (co-phasing, inter-polarization phase compensation, phase compensation between polarizations) φₙ = exp(jπn/2) between two polarizations (a first polarization and a second polarization, a horizontal polarization and a vertical polarization), and indicates a difference of a phase of the second polarization relative to a phase of the first polarization. θp indicates a phase of the second half of the ports relative to a phase of the first half of the ports.

### - Type 1 Multi-Panel Codebook

For Rel-15 type 1 multi-panel CSI, the higher layer parameter of the codebook type (subType in type1 of codebookType in CodebookConfig) is set to a type 1 multi-panel ('typeI-MultiPanel') for the UE. For the Rel-15 type 1 multi-panel CSI, as compared with that for the type 1 single-panel codebook, the number N_{g} of panels is configured in addition to N₁ and N₂. As compared with that for the type 1 single-panel codebook, as an inter-panel phase difference (inter-panel co-phasing, inter-panel phase compensation, phase compensation between panels), i,_{1,4} is additionally reported. The same SD beam (DFT vector v_{l,m}, SD base indices l and m) is selected for each panel, and only the inter-panel phase difference is additionally reported.

For P_{CSI-RS}, supported configurations (value combinations) of (N_{g}, N₁, N₂) and (O₁, O₂) are defined in a specification. (N₁, N₂) is configured by ng-n1-n2 in typeI-MultiPanel. i1_{,1} = l = {0, 1, ..., N₁O₁ - 1} is an over-sampled SD base horizontal component. i_{1,2} = m = {0, 1, ..., N₂O₂ - 1} is an over-sampled SD base vertical component. i_{1,4,q} = p = {0, 1, 2, 3} for q = 1, ..., N_{g} - 1 is the number of panels. i₂ = n = {0, 1, 2, 3} is the number of beams for each panel.

An antenna configuration parameter for the type 1 multi-panel codebook is ng-n1-n2 (N_{g}, N₁, N₂). An existing specification supports up to rank 4, and does not support rank 5 or higher.

Respective PMI values correspond to codebook indices i₁, i₂. v is an RI value (the number of layers). For v = 1, i₁ = [i_{1,1} i_{1,2} i_{1,4}]. For v ∈ {2, 3, 4}, i₁ = [i_{1,1} i_{1,2} i_{1,3} i_{1,4}].

When the codebook mode is set to 1, i_{1,4} = i_{1,4,1} for N_{g} = 2. For N_{g} = 4, i_{1,4} = [i_{1,4,1} i_{1,4,2} i_{1,4,3}]. When the codebook mode is set to 2, i_{1,4} = [i_{1,4,1} i_{1,4,2}]. i_{1,4} is associated with the number N_{g} of panels and the codebook mode. Codebook mode 2 is supported for only N_{g} = 2. [i_{1,4,1} i_{1,4,2}] in codebook mode 2 correspond to two respective polarizations. Each of the two values represents, for the corresponding polarization, a wideband phase difference of a second panel (panel 1) relative to a first panel (panel 0). Only one value of i_{1,4} in N_{g} = 2 and codebook mode 1 is reported. The one value represents a wideband phase difference of the second panel (panel 1) relative to the first panel (panel 0).

When the codebook mode is set to 2, i₂ = [i_{2,0} i_{2,1} i_{2,2}]. The number and value of i₂ are associated with the codebook mode, and can be different from those for the type 1 single-panel codebook. When subband reporting is configured, i₂ is an index for the subband. When wideband reporting is configured, i₂ is an index for the wideband. In codebook mode 1, the number and value of i₂ are similar to those for the type 1 single-panel codebook, and i₂ has one value for each subband. In codebook mode 2 (N_{g} = 2), a phase difference of the subband has three values, and represents phase differences between polarizations and between panels.

In codebook mode 2, more phase differences are reported for more accurate CSI, thus leading to greater feedback overhead. Codebook mode 2 is supported for only N_{g} = 2.

The type 1 multi-panel codebook is based on the type 1 single-panel codebook. In the type 1 multi-panel codebook, a codebook for a first panel (panel 0) follows the type 1 single-panel codebook. A codebook for another panel applies the same precoder, and is accompanied by an additional phase difference between a plurality of panels.

φₙ, aₚ, bₚ, uₘ, v_{l,m} for the precoding matrix are given by the following expression. $\begin{matrix}{φ}_{n} = {e}^{jπn / 2} \\ {a}_{p} = {e}^{jπ / 4} {e}^{jπp / 2} \\ {b}_{n} = {e}^{- jπ / 4} {e}^{jπn / 2} \\ {u}_{m} = \left\{\begin{matrix}\left[1 {e}^{j \frac{2 πm}{{O}_{2} {N}_{2}}} … {e}^{j \frac{2 πm \left({N}_{2}-1\right)}{{O}_{2} {N}_{2}}}\right] & {N}_{2} > 1 \\ 1 & {N}_{2} = 1\end{matrix}\right. \\ {ν}_{l , m} = {\left[{u}_{m} {e}^{j \frac{2 πl}{{O}_{1} {N}_{1}}}{u}_{m} … {e}^{j \frac{2 πl \left({N}_{1}-1\right)}{{O}_{1} {N}_{1}}} {u}_{m}\right]}^{T}\end{matrix}$

A precoding matrix for v-layer CSI reporting using antenna ports 3000 to 2999+P_{CSI-RS} is represented by W^{(v)}. The precoding matrix for the i-th layer, the number N_{g} of panels, and codebook mode X is represented by W_{l,m,p,n}^{i,N_g,x}. [i_{1,1}, i_{1,2}, i_{1,4}, i₂] = [l, m, p, n].

For codebook mode 1 and N_{g} = {2, 4}, precoding matrix W_{l,m,p,n}⁽¹⁾ for the 1-layer CSI reporting is represented by W_{l,m,p,n}^{1,N_g,1}. For codebook mode 1 and N_{g} = {2, 4}, precoding matrix W_{l,l',m,m',p,n}⁽²⁾ for the 2-layer CSI reporting is represented by (1/sqrt (2)) [W_{l,m,p,n}^{(1,N_g,1)} W_{l',m',p,n}^{(2,N_g,1)}]. Here, W_{l,m,p,n}^{1,N_g,1} and W_{l,m,p,n}^{2,N_g,1} (W_{l,m,p,n}^{1,2,1} and W_{l,m,p,n}^{2,2,1} for N_{g} = 2, and W_{l,m,p,n}^{1,4,1} and W_{l,m,p,n}^{2,4,1} for N_{g} = 4) for N_{g} = {2, 4} are given by the following expression. $\begin{matrix}{W}_{l . m . p . n}^{1.2.1} = \frac{1}{\sqrt{{P}_{CSI - RS}}} \left[\begin{matrix}{ν}_{l . m} \\ {φ}_{n} {ν}_{l . m} \\ {φ}_{{p}_{1}} {ν}_{l . m} \\ {φ}_{n} {φ}_{{p}_{1}} {ν}_{l . m}\end{matrix}\right] & {W}_{l . m . p . n}^{2.2.1} = \frac{1}{\sqrt{{P}_{CSI - RS}}} \left[\begin{matrix}{ν}_{l . m} \\ - {φ}_{n} {ν}_{l . m} \\ {φ}_{{p}_{1}} {ν}_{l . m} \\ - {φ}_{n} {φ}_{{p}_{1}} {ν}_{l . m}\end{matrix}\right] \\ {W}_{l . m . p . n}^{1.4.1} = \frac{1}{\sqrt{{P}_{CSI - RS}}} \left[\begin{matrix}{ν}_{l . m} \\ {φ}_{n} {ν}_{l . m} \\ {φ}_{{p}_{1}} {ν}_{l . m} \\ {φ}_{n} {φ}_{{p}_{1}} {ν}_{l . m} \\ {φ}_{{p}_{2}} {φ}_{l . m} \\ {φ}_{n} {φ}_{{p}_{2}} {ν}_{l . m} \\ {φ}_{{p}_{3}} {ν}_{l . m} \\ {φ}_{n} {φ}_{{p}_{3}} {ν}_{l . m}\end{matrix}\right] & {W}_{l . m . p . n}^{2.4.1} = \frac{1}{\sqrt{{P}_{CSI - RS}}} \left[\begin{matrix}{ν}_{l . m} \\ - {φ}_{n} {ν}_{l . m} \\ {φ}_{{p}_{1}} {ν}_{l . m} \\ - {φ}_{n} {φ}_{{p}_{1}} {ν}_{l . m} \\ {φ}_{{p}_{2}} {φ}_{l . m} \\ - {φ}_{n} {φ}_{{p}_{2}} {ν}_{l . m} \\ {φ}_{{p}_{3}} {ν}_{l . m} \\ - {φ}_{n} {φ}_{{p}_{3}} {ν}_{l . m}\end{matrix}\right]\end{matrix}$

Here, φₙ = e^{jπn/2}. For N_{g}=2, p = p₁, and for N_{g}=4, p = [p₁, p₂, p₃]. φ_{p_1,} φ_{p_2}, and φ_{p_3} represent the inter-panel phase difference (inter-panel phase compensation). In each precoding matrix, the first and second rows correspond to a first panel (panel 0), the third and fourth rows correspond to a second panel (panel 1), the fifth and sixth rows correspond to a third panel (panel 2), and the seventh and eighth rows correspond to a fourth panel (panel 3). The same SD beam is selected for all the panels, and thus each row has the same v_{l,m}. φ_{p_1} represents a phase difference of the second panel relative to the first panel. φ_{p_2} represents a phase difference of the third panel relative to the first panel. φ_{p_3} represents a phase difference of the fourth panel relative to the first panel.

For codebook mode 2 and N_{g} = 2, precoding matrix W_{l,m,p,n}⁽¹⁾ for the 1-layer CSI reporting is represented by W_{l,m,p,n}^{1,2,1}. For codebook mode 2 and N_{g} = 2, precoding matrix W_{l,l',m,m',p,n}⁽²⁾ for the 2-layer CSI reporting is represented by (1/sqrt (2)) [W_{l,m,p,n}^{(1,2,2)} W_{l',m',p,n}^{(2,2,2)}]. Here, W_{l,m,p,n}^{1,2,2} and W_{l,m,p,n}^{2,2,2} are given by the following expression. ${W}_{l . m . p . n}^{1.2.2} = \frac{1}{\sqrt{{P}_{CSI - RS}}} \left[\begin{matrix}{ν}_{l . m} \\ {φ}_{{n}_{0}} {ν}_{l . m} \\ {a}_{{p}_{1}} {b}_{{n}_{1}} {ν}_{l . m} \\ {a}_{{p}_{2}} {b}_{{n}_{2}} {ν}_{l . m}\end{matrix}\right] {W}_{l . m . p . n}^{2.2.2} = \frac{1}{\sqrt{{P}_{CSI - RS}}} \left[\begin{matrix}{ν}_{l . m} \\ - {φ}_{{n}_{0}} {ν}_{l . m} \\ {a}_{{p}_{1}} {b}_{{n}_{1}} {ν}_{l . m} \\ - {a}_{{p}_{2}} {b}_{{n}_{2}} {ν}_{l . m}\end{matrix}\right]$

In each precoding matrix, the first and second rows correspond to a first panel (panel 0), and the third and fourth rows correspond to a second panel (panel 1). The same SD beam is selected for all the panels, and thus each row has the same v_{l,m}. p = [p₁ p₁], and n = [n₀, n₁, n₂]. a_{p_1} represents, for a first polarization, a phase difference of the second panel (panel 1) relative to the first panel (panel 0). a_{p_2} represents, for a second polarization, a phase difference of the second panel (panel 1) relative to the first panel (panel 0). φ_{n_0} represents, for each subband, a phase difference of a second polarization of the first panel relative to a first polarization of the first panel. b_{n_1} represents, for each subband, a phase difference of a first polarization of the second panel relative to a first polarization of the first panel. b_{n_2} represents, for each subband, a phase difference of a second polarization of the second panel relative to a first polarization of the first panel.

### (PMI/Type 2 Codebook)

In the present disclosure, a type 2 codebook, an enhanced type 2 codebook, a type 2 port selection (PS) codebook, an enhanced type 2 PS codebook, a further enhanced type 2 port PS codebook, a codebook for CJT, and a Doppler codebook may be used interchangeably.

### - Type 2 Codebook

For a type 2 (type II) codebook (Rel. 15, type 2 CSI), the UE is configured with the higher layer parameter codebookType set to 'typeII'.

In the present disclosure, matrix Z with X rows and Y columns is sometimes expressed as Z(X×Y).

For the type 2 CSI of Rel. 15, the precoding matrix for each subband (SB-wise) is based on the following expression for given layer l. ${W}_{l} \left({N}_{t}\times {N}_{3}\right) = {W}_{1} {W}_{2 , l}$

Nₜ is the number of antennas/antenna ports. N₃ is a total number of precoding (beamforming) matrices (precoders) (number of subbands) indicated by a PMI.

W₁(Nₜ×2L) is 2L DFT vectors (over-sampled DFT vectors), and indicates a selected spatial domain base. L ∈ {2, 4} is the number of beams for each layer. The actual number of beams taking account of two polarizations at one point is 2L. For example, the DFT vectors of L = 2 SD beams may be represented by bᵢ and bⱼ, respectively.

W_{2,l}(2L×N₃) is a matrix (LC coefficient matrix) including linear combination coefficients (linear combination (LC) coefficients, subband complex LC coefficients, combination coefficients) for layer l. W_{2,l} indicates beam selection and a phase difference (co-phasing) between two polarizations. For example, the LC coefficients respectively corresponding to L = 2 SD beams bᵢ and bⱼ are cᵢ and cⱼ. For example, a channel vector h is approximated by a linear combination cᵢbᵢ, + cⱼbⱼ of L = 2 SD beams. Feedback overhead is primarily caused by an LC coefficient matrix W_{2,l}. The type 2 CSI of Rel. 15 supports only ranks 1 and 2.

In the type 2 CSI, a channel (channel matrix) for a certain user is represented by a linear combination of two polarizations and L SD beams. The type 2 CSI of Rel. 15 supports ranks 1 and 2.

### - Enhanced Type 2 Codebook (Rel. 16)

For type 2 CSI (enhanced type 2 codebook) of Rel. 16, the UE is configured with the higher layer parameter codebookType set to 'typeII-r16'.

The type 2 CSI of Rel. 16 reduces overhead related to the LC coefficient matrix W_{2,l} by frequency domain (FD) compression. The type 2 CSI of Rel. 16 supports ranks 3 and 4 in addition to ranks 1 and 2.

In the type 2 CSI of Rel. 16, the precoding matrix Wₗ for the given layer l is expressed by the following expression.${W}_{1} = {W}_{1} {{W}^{∼}}_{1} {W}_{f} {{,}_{1}}^{H}$

W_{2,l} in the type 2 CSI of Rel. 15 is approximated by W^{~}ₗW_{f,l}^{H}. The matrix W^{~} may be expressed by adding "~" above W. W^{~}ₗ may be expressed as W^{~}_{2,l}. W_{f,l}^{H} is an adjoint matrix of W_{f,l}, and is obtained by the conjugate transpose of W_{f,l}.

For a CSI report, the UE may be configured with one of two subband sizes. The subband (CQI subband) may be defined as N_{PRB}^{SB} consecutive PRBs, and may depend on a total number of PRBs in a BWP. The number R of PMI subbands per CQI subband is configured by an RRC IE (numberOfPMI-SubbandsPerCQI-Subband). R controls a total number N₃ of precoding matrices indicated by a PMI, as a function of the number of subbands configured in csi-ReportingBand, a subband size configured by subbandSize, and a total number of PRBs in a BWP.

W₁(Nₜ×2L) indicates 2L DFT vectors. To represent the matrix, a plurality of indices of SD bases and two-dimensional over-sampling factors are reported.

W^{~}ₗ(2L×Mᵥ) is an LC coefficient matrix. To represent the matrix, up to K₀ non-zero coefficients (NZCs, non-zero amplitude LC coefficients) are reported. The report includes two parts: a bitmap indicating an NZC location, and a quantized NZC.

W_{f,l}(N₃×Mᵥ) is Mᵥ DFT vectors (frequency domain (FD) DFT vectors, FD base vectors, FD beams) for layer l, and indicates a selected frequency domain base. Each DFT vector uses N₃ FD bases (subbands). N₃ is a total number of precoding (beamforming) matrices (precoders) (number of subbands) indicated by a PMI as a function of the number of subbands configured in csi-ReportingBand. csi-ReportingBand indicates, when CSI for a certain BWP is reported, contiguous or discontiguous subbands in the BWP. Mᵥ FD DFT vectors are present for each layer. When N₃ > 19, Mᵥ FD DFT vectors (FD bases) from an intermediate subset (InS) of size N₃'(< N₃) are selected. When N₃ ≤ 19, log₂ (C(N₃ - 1, Mᵥ - 1)) bits are reported. Here, C(N₃ - 1, Mᵥ - 1) represents the number (combinatorial coefficient) of combinations to select Mᵥ - 1 from N₃ - 1, and is also referred to as binomial coefficients.

Response/distribution (frequency response) of a frequency domain indicated by a linear combination of an FD DFT vector and an LC coefficient may be referred to as an FD beam. The FD beam may correspond to a delay profile (time response).

A PMI subband size is given by a CQI subband size/R, and R ∈ {1, 2}. In other words, R is a ratio of the CQI subband size to the PMI subband size. The number Mᵥ of FD DFT vectors for given rank v is given by ceil(pᵥ×N₃/R). The number Mᵥ of FD DFT vectors is the same for all layers l ∈ {1, 2, 3, 4}. pv is configured by a higher layer.

A plurality of precoding matrices indicated by a PMI are determined from L + Mᵥ vectors.

L SD beams (SD DFT vectors) v_{m_1^(i),m_2^(i)} for beam index i = 0, 1, ..., L - 1 are identified by q₁, q₂, n₁, and n₂, and are indicated by i_{1,1} and i_{1,2}.

Mᵥ FD DFT vectors are identified by Mᵢₙᵢₜᵢₐₗ ∈ {-2Mᵥ + 1, -2Mᵥ + 2, ..., 0}, n_{3,l} = [n_{3,l}⁽⁰⁾, ..., n_{3,l}^{(M_v-1)}], and n_{3,l}^{(f)} ∈ {0, 1, ..., N₃ - 1}.

In the FD DFT vectors, an element (FD base) for an index t = 0, 1, ..., N₃ - 1 and layer l = 1, ..., v of an FD base (subband) is y_{t,l}^{(f)} = exp(j2πtn_{3,l}^{(f)}/N₃). In Mᵥ FD DFT vectors, an FD DFT vector for index f = 0, 1, ..., Mᵥ - 1 of the FD DFT vector is [y_{0,l}^{(f)}, y_{1,l}^{(f)}, ..., y_{N_3-1,l}^{(f)}]^{T}.

Each row of W_{2,l} indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD DFT vectors. For example, when Mᵥ = 2, by using FD DFT vectors f₂ and f_{q} and LC coefficients d₁⁰ and d₂⁰, frequency response associated with SD beam b₀ is approximated by d₁⁰f₂ +, d₂⁰f_{q}.

Mᵥ dominant FD DFT vectors are selected. With Mᵥ << N₃, overhead of W^{~}ₗ is much smaller than overhead of W_{2,l}. All or some of the Mᵥ FD DFT vectors are used to approximate frequency response of each SD beam. A bitmap is used to report only an FD DFT vector selected for each SD beam. If no bitmap is reported, all the FD DFT vectors are selected for each SD beam. In this case, NZCs of all the FD DFT vectors are reported for each SD beam. The number of NZCs in one layer Kₗ^{NZ} ≤ K₀ = ceil(β×2LMᵥ), and the number of NZCs over all the layers K^{NZ} ≤ 2K₀ = ceil(β×2LMᵥ). β is configured by a higher layer.

In the enhanced type 2 codebook of Rel. 16, the values of L, β, and pᵥ (codebook parameter combination, parameter combination) are determined by a higher layer parameter paramCombination-r16 (parameter combination configuration).

In the present disclosure, a combination of codebook parameters, a codebook parameter combination, a parameter combination, and a parameter combination configuration may be used interchangeably.

Type 2 CSI feedback on a PUSCH in Rel. 16 includes two parts. CSI part 1 has a fixed payload size, and is used to identify the number of information bits in CSI part 2. A size of part 2 is variable (UCI size depends on the number of NZCs that is not recognized by the base station). In CSI part 1, the UE reports the number of NZCs that determines the size of CSI part 2. After receiving CSI part 1, the base station recognizes the size of CSI part 2.

In enhanced type 2 CSI feedback of Rel. 16, CSI part 1 includes an RI (if reported), a CQI, and an indicator of a total number of non-zero amplitude coefficients over a plurality of layers for enhanced type 2 CSI. The RI (if reported), the CQI, and the indicator of the total number of non-zero amplitude coefficients over a plurality of layers as fields of part 1 are separately coded. CSI part 2 includes a PMI of enhanced type 2 CSI. Parts 1 and 2 are separately coded. CSI part 2 (PMI) includes at least one of an over-sampling factor, an index of an SD base corresponding to each SD beam, an index Mᵢₙᵢₜᵢₐₗ of an initial FD DFT vector (start offset) of a selected DFT window, an FD base selected for each layer, an NZC (amplitude and phase) for each layer, a strongest (maximum strength, maximum amplitude) coefficient indicator (SCI) for each layer, and amplitude of the strongest coefficient for each layer/each polarization.

A plurality of PMI indices (PMI values, codebook indices) associated with different pieces of CSI part 2 information may follow the following for the l-th layer.
- i_{1,1}: Rotation factor [q₁ q₂] in two-dimensional over-sampling. q₁ ∈ {0, 1, ..., O₁ - 1} and q₂ ∈ {0, 1, ..., O₂ - 1}. The beam index in each (SD) beam group is selected, and is reported/indicated by i_{1,1}.
- i_{1,2}: Plurality of indices of SD bases corresponding to respective SD beams. i1_{,2} ∈ {0, 1, ..., C(N₁N₂, L) - 1}. L beam groups are selected from N₁N₂ (SD) beam groups, and are reported/indicated by i_{1,2}.
- i_{1,5}: Codebook indicator. Index of an FD base of a selected DFT window. i1_{,5} ∈ {0, 1, ..., 2Mᵥ - 1}.
- i_{1,6,l}: Codebook indicator. FD base selected for the l-th layer. When N₃ ≤ 19, i_{1,6,l} ∈ {0, 1, ..., C(N₃ - 1, Mᵥ - 1) - 1}. When N₃ > 19, i_{1,6,l} ∈ {0, 1, ..., C(2Mᵥ - 1, Mᵥ - 1) - 1}.
- i_{1,7,l}: Bitmap indicator for the l-th layer. Non-zero bits in the bitmap identify which coefficient out of i_{2,4,l} and i_{2,5,l} is to be reported. i_{1,7,l} = [k_{l,0}⁽³⁾ ... k_{l,M_v-1}⁽³⁾], k_{l,f}⁽³⁾ = [k_{l,0,f}⁽³⁾ ... k_{l,M_v-1,f}⁽³⁾], and k_{l,i,f}⁽³⁾ ∈ {0, 1}.
- i_{1,8,l}: Strongest coefficient indicator for the l-th layer (maximum element k_{l,i,f}⁽²⁾ in the amplitude coefficient indicator).
- i_{2,3,l}: Amplitude coefficient indicator (of both polarizations) of (wideband) coefficients of the l-th layer. i_{2,3,l} = [k_{l,0}⁽¹⁾ k_{l,1}⁽¹⁾].
- i_{2,4,l}: Amplitude coefficient indicator of a reported (subband) coefficient of the l-th layer. i_{2,4,l} = [k_{l,0}⁽²⁾ ... k_{l,M_v-1}⁽²⁾].
- i_{2,5,l}: Phase coefficient indicator of a reported (subband) coefficient of the l-th layer. i_{2,5,l} = [c_{l,0,f} ... c_{l,M_v-1,f}].

fₗ^{*} ∈ {0, 1, ..., Mᵥ - 1} is an index of i_{2,4,l}, and iₗ^{*} ∈ {0, 1, ..., 2L - 1} is an index of k_{l,f_l^*}⁽²⁾. fₗ* and iₗ^{*} identify the strongest coefficient for layer l = 1, ..., v, i.e., an element k_{l,i_l^*,f_l^*}⁽²⁾ of i_{2,4,l} for layer l. A codebook index n_{3,l} is remapped to n_{3,l}^{(f)} = (n_{3,l}^{(f)} - n_{3,l}^{(f_l^*)}) mod N₃ with respect to n_{3,l}^{(f_l^*)}, and is n_{3,l}^{(f_l^*)} = 0 after the remapping. The index f is remapped to f = (f - fₗ^{*}) mod Mᵥ with respect to fₗ^{*}, and is fₗ^{*} = 0 (l = 1, ..., v) after the remapping. i_{2,4,l,} i_{2,5,l}, and i_{1,7,l} respectively represent the amplitude coefficient, the phase coefficient, and the bitmap after the remapping. The strongest coefficient of layer l identified by i_{1,8,l} ∈ {0, 1, ..., 2L - 1} is given as i_{1,8,l} = Σᵢ₌₀^{i_1^*}k_{l,i,0}⁽³⁾ - 1 for v = 1 and given as i_{1,8,l} = iₗ^{*} for l < v ≤ 4.

Each reported LC coefficient (complex coefficient) in W^{~}ₗ is separately quantized amplitude and phase.

### - Amplitude Quantization

Polarization-specific reference amplitude is 16-level quantization using a table defined in a specification (mapping of elements of amplitude coefficient indicator i_{2,3,l}: mapping from amplitude coefficient indicator element k_{l,p}⁽¹⁾ to amplitude coefficient p_{l,p}⁽¹⁾). According to the table, pₗ⁽¹⁾ = [p_{l,0}⁽¹⁾ p_{l,1}⁽¹⁾] is quantized to [k_{l,0}⁽¹⁾ k_{l,1}⁽¹⁾] and k_{l,p}⁽¹⁾ ∈ {0, ..., 15}. All the other coefficients are 8-level quantization using a table defined in a specification (mapping of elements of amplitude coefficient indicator i_{2,4,l}: mapping from amplitude coefficient indicator element k_{l,i,f}⁽²⁾ to amplitude coefficient p_{l,i,f}⁽²⁾). According to the table, pₗ⁽²⁾ = [p_{l,0}⁽²⁾ ... p_{l,M_v-1}⁽²⁾] and p_{l,f}⁽²⁾ = [p_{l,0,f}⁽²⁾ ... p_{l,2L-1.f}⁽²⁾] are quantized to k_{l,f}⁽²⁾ = [k_{l,0,f}⁽²⁾ ... k_{l,2L-1.f}⁽²⁾] and k_{l,i,f}⁽²⁾ ∈ {0, ..., 7}.

### - Phase Quantization

Elements (amplitude coefficient indicator elements) of an amplitude coefficient indicator i_{2,5,l} [c_{l,0} ... c_{l,M_v-1}] are reported by the UE (by using 4 bits). All the phase coefficients are quantized by using 16-PSK. The phase coefficients in quantity φ_{l,i,f} = exp(j2πc_{l,i,f}/16) for a phase difference are quantized to c_{l,f} = [c_{l,0,f} ... c_{l,2L-1.f}] and c_{l,i,fi} ∈ {0, ..., 15}.

An amplitude coefficient indicator element k_{l,floor(i_l^*/L)}⁽¹⁾ = 15 (maximum value), an amplitude coefficient indicator element k_{l,i_l^*,0}⁽²⁾ = 7 (maximum value), and a phase coefficient indicator element c_{l,i_l^*,0}⁽²⁾ = 0 (minimum value), which correspond to the strongest coefficient of layer l. For l = 1, ..., v, k_{l,floor(i_l^*/L)}⁽¹⁾, k_{l,i_l^*,0}⁽²⁾, and c_{l,i_l^*,0}⁽²⁾ = 0 are not reported.

i_{1,5} and i_{1,6,l} are PMI indices for FD base reporting. i_{1,5} is reported only when N₃ > 19.

The precoding matrix W^{(v)} represented by a codebook for v ( = 1 to 4)-layer CSI reporting using 3000 to 2999+P_{CSI-RS} is based on the precoding matrix W^{l} for layer l ( = 1 to v). The precoding matrix W^{l} is expressed by the following expression. $\begin{matrix}{W}_{{q}_{1} , {q}_{2} , {n}_{1} , {n}_{2} , {n}_{3 , l} , {p}_{l}^{\left(1\right)} , {p}_{l}^{\left(2\right)} , {i}_{2 , 5 , l} , t}^{l} \\ = \frac{1}{\sqrt{{N}_{1} {N}_{2} {γ}_{t , l}}} \left[\begin{matrix}{\sum }_{i = 0}^{L - 1} {v}_{{m}_{1}^{\left(i\right)} , {m}_{2}^{\left(i\right)}} {p}_{l , 0}^{\left(1\right)} {\sum }_{f = 0}^{{M}_{υ} - 1} {y}_{t , l}^{\left(f\right)} {p}_{l , i , f}^{\left(2\right)} {φ}_{l , i , f} \\ {\sum }_{i = 0}^{L - 1} {v}_{{m}_{1}^{\left(i\right)} , {m}_{2}^{\left(i\right)}} {p}_{l , 1}^{\left(1\right)} {\sum }_{f = 0}^{{M}_{υ} - 1} {y}_{t , l}^{\left(f\right)} {p}_{l , i + L , f}^{\left(2\right)} {φ}_{l , i + L , f}\end{matrix}\right] , l = 1 , 2 , 3 , 4 , \\ {γ}_{t , l} = {\sum }_{i = 0}^{2 L - 1} {\left({p}_{l , \left⌊\frac{i}{L}\right⌋}^{\left(1\right)}\right)}^{2} {\left|{\sum }_{f = 0}^{{M}_{υ} - 1} {y}_{t , l}^{\left(f\right)} {p}_{l , i , f}^{\left(2\right)} {φ}_{l , i , f}\right|}^{2}\end{matrix}$

Here, beam index i = 0, 1, ..., L - 1, m₁⁽ⁱ⁾ = O₁n₁⁽ⁱ⁾ + q₁, m₂⁽ⁱ⁾ = O₂n₂⁽ⁱ⁾ + q₂, n₁⁽ⁱ⁾ ∈ {0, 1, ..., N₁ - 1}, and n₂⁽ⁱ⁾ ∈ {0, 1, ..., N₂ - 1}. n1₍ⁱ⁾ and n₂⁽ⁱ⁾ are SD bases for indicating an SD beam i. v_{m_1^(i),m_2^(i)} is a DFT vector indicating an SD beam. pl_{,0(}¹⁾ indicates a wideband amplitude coefficient. p_{l,i,f}⁽²⁾ indicates a subband amplitude coefficient. φ_{l,i,f} indicates a phase coefficient. In this manner, the codebook for each layer includes the strongest coefficient for each polarization, the amplitude coefficient for each SD beam for each FD beam for each polarization, and the phase coefficient for each SD beam for each FD beam for each polarization.

As grouping of CSI parts 2, for a given CSI report, PMI information is grouped into three groups (groups 0 to 2). This is important for a case where CSI omission is performed. Each reported element of indices i_{2,4,l}, i_{2,5,l}, and i_{1,7,l} is associated with a specific priority rule. Groups 0 to 2 follow the following.
- Group 0: indices i_{1,1}, i_{1,2} and i_{1,8,l} (l = 1, ..., v)
- Group 1: highest (higher) v2LMᵥ-floor(K^{NZ}/2) priority elements in index i_{1,5} (if reported) and indices i_{1,6,l} and i_{1,7,l} (if reported), highest (higher) ceil(K^{NZ}/2)-v priority elements in i_{2,3,l} and i_{2,4,l}, and highest (higher) ceil(K^{NZ}/2)-v priority elements in i_{2,5,l} (l = 1, ..., v)
- Group 2: lowest (lower) floor(K^{NZ}/2) priority elements in i_{1,7,l}, lowest (lower) floor(K^{NZ}/2) priority elements in i_{2,4,l}, and lowest (lower) floor(K^{NZ}/2) priority elements in i_{2,5,l} (l = 1, ..., v)

In the type 1 CSI, an SD beam indicated by using an SD DFT vector is transmitted to the UE. In type 2 CSI, L SD beams are linearly coupled and transmitted to the UE. Each SD beam can be associated with a plurality of FD DFT vectors (FD beams, FD bases, frequency responses). For corresponding SD beams, channel frequency response can be obtained by using linear combination of FD DFT vectors for the SD beams. The channel frequency response corresponds to the power delay profile.

### - Type 2 Port Selection Codebook

For type 2 port selection (PS) CSI (type 2 PS codebook) of Rel. 15, the UE is configured with the higher layer parameter codebookType set to 'typeII-PortSelection'.

In the type 2 port selection CSI of Rel. 15, the UE does not need to derive SD beams in consideration of SD DFT vectors as in the type 2 CSI. The base station transmits CSI-RSs by using K CSI-RS ports beamformed in consideration of a set of SD beams. The UE selects/identifies the best L (≤K) CSI-RS ports for each polarization, and reports indices of these ports in W₁. The type 2 PS CSI of Rel. 15 supports ranks 1 and 2.

### - Enhanced Type 2 Port Selection Codebook (Rel. 16)

For type 2 PS CSI (enhanced type 2 PS codebook) of Rel. 16, the UE is configured with the higher layer parameter codebookType set to 'typeII-PortSelection-r16'.

Operation of the type 2 PS CSI of Rel. 16 is similar to that of the type 2 CSI of Rel. 16, except for selection of the SD beams. The type 2 PS CSI of Rel. 15 supports ranks 1 to 4.

The precoding matrix Wₗ for precoder generation for each subband (subband (SB)-wise) for layer l ∈ {1, 2, 3, 4} is expressed by the following expression. ${W}_{l} \left({N}_{t}\times {N}_{3}\right) = {QW}_{1} {{W}^{∼}}_{l} {{W}_{f , l}}^{H}$

Here, Q(Nₜ×K) indicates K SD beams used for CSI-RS beamforming. W₁(K×2L) is a block diagonal matrix. W^{~}ₗ(2L×M) is an LC coefficient matrix. W_{f,l}(N₃×M) is a matrix including M vectors (FD base vectors), and each vector includes N₃ FD bases. K is configured by a higher layer. L is configured by a higher layer. P_{CSI-RS} ∈ {4, 8, 12, 16, 24, 32}. When P_{CSI-RS} > 4, L ∈ {2,3,4}.

In the type 2 PS CSI of Rel. 15/16, each CSI-RS port #i is associated with an SD beam bᵢ.

The type 2 PS CSI of Rel. 16 has the number of FD base vectors reduced from N₃ to Mᵥ (Mᵥ << N₃) similarly to the type 2 CSI of Rel. 16, and has thereby reduced overhead compared to the type 2 PS CSI of Rel. 15.

### - Further Enhanced Type 2 Port Selection Codebook (Rel. 17)

For type 2 PS CSI/codebook (further enhanced type 2 PS codebook) of Rel. 17, the UE is configured with the higher layer parameter codebookType set to 'typeII-PortSelection-r17'.

In the type 2 PS CSI of Rel. 17, each CSI-RS port #i is associated with an SD-FD beam pair (pair of SD beam bᵢ and FD beam f_{i,j} (where j is a frequency index)) in place of an SD beam. In this example, ports 3 and 4 are associated with the same SD beam and are associated with different FD beams.

Frequency selectivity of channel frequency response observed by the UE based on an SD beam-FD beam pair can be reduced by delay pre-compensation more than frequency selectivity of channel frequency response observed by the UE based on an SD beam.

A primary scenario for the type 2 PS codebook of Rel. 17 is FDD. Channel reciprocity based on SRS measurement is incomplete (angles between a UL beam and a DL beam may be different, a UL frequency and a DL frequency are different in FDD, and effective antenna intervals are different in the UL frequency and the DL frequency). However, the base station can obtain/select some pieces of partial information (dominant angles and delays (SD beams and FD beams)). By using SRS measurement by the base station in addition to CSI reporting, the base station can obtain CSI for determination of a DL MIMO precoder. In this case, some CSI reports may be omitted to reduce CSI overhead.

In parameter combinations L, β, and pᵥ for the Rel-16 type 2 codebook, L is the number of SD beams. pᵥ is a parameter for calculation of number Mᵥ = ceil(pᵥ×N₃/R), which is the number of FD base vectors for rank v. β is a parameter for calculation of a maximum number of NZCs.

In the further enhanced type 2 PS codebook of Rel. 17, the values of α, M, and β (codebook parameter combination, parameter combination) are determined by a higher layer parameter paramCombination-r17 (codebook parameter configuration). In parameter combinations α, M, and β for the further enhanced type 2 PS codebook of Rel. 17, α is a parameter for calculation of number K₁ = αP_{CSI-RS}, which is the number of selected CSI-RS ports in the PS codebook. M is the number of FD base vectors. β is a parameter for calculation of a maximum number of NZCs. The precoding matrix indicated by the PMI is determined from L+M vectors. Here, L = K₁/2, and K₁ = αP_{CSI-RS}.

Based on L vectors v_{m^(i)} (i = 0, 1, ..., L - 1), K₁ ports are selected from P_{CSI-RS} ports. The vector v_{m^(i)} is identified by m = [m⁽⁰⁾ ... [m^{(L-1)}] and m⁽ⁱ⁾ ∈ {0, 1, ..., P_{CSI-RS}/2 - 1}. m(ⁱ⁾ is reported/indicated by the index i_{1,2} ∈ {0, 1, ..., C(P_{CSI-RS}/2, L) - 1}.

In the further enhanced type 2 PS CSI of Rel. 17, each CSI-RS port is beamformed by using an SD beam and an FD beam. Each port is associated with an SD-FD beam pair.

The precoding matrix Wₗ for the given layer l is expressed by the following expression. ${W}_{l} \left(K\times {N}_{3}\right) = {W}_{1} {{W}^{∼}}_{l} {{W}_{f , l}}^{H}$

For W₁(K×2L), each matrix block is formed by L columns of a K×K identity matrix. The base station transmits K beamformed CSI-RS ports. Each port is associated with an SD-FD beam pair. The UE selects L ports from K ports, and reports an index indicating the selected ports to the base station as a part of the PMI. Note that, in Rel. 16, each port is associated with an SD beam.

W^{~}ₗ(2L×Mᵥ) is a matrix including combination coefficients (subband complex LC coefficients). Up to K₀ NZCs are reported. The report includes two parts: a bitmap indicating an NZC location, and a quantized NZC.

In the further enhanced type 2 PS CSI of Rel. 17, Kₗ^{NZ} = Σᵢ₌₀^{k1-1}Σ_{f=0}^{M-1}k_{l,i,f}⁽³⁾ ≤ K₀ is the number of non-zero coefficients in layer l = 1, ..., v, and K^{NZ} = Σₗ₌₁^{v}Kₗ^{NZ} ≤ 2K₀ is the total number of non-zero coefficients. If v ≤ 2 and K^{NZ} = K₁Mv, i_{1,7,l} for layer l = 1, ..., v (bitmap indicator for the l-th layer) is not reported. In other words, when the total number of reported NZCs is equal to the maximum number of K₁Mv and v ≤ 2, the report of the bitmap indicating the location of the NZCs is omitted. Note that, in Rel. 16, the bitmap of the NZC location is always reported.

W_{f,l}(N₃×Mᵥ) is a matrix including Mᵥ (Mᵥ = 1 or 2) FD base vectors for each layer. Each vector includes N₃ FD bases (FD-DFT bases). The base station may remove W_{f,l}. When Mᵥ = 1, W_{f,l} is off, and no additional FD base vectors are reported. When Mᵥ = 2, W_{f,l} is on, and Mᵥ additional FD base vectors are reported. When Mᵥ = 2, FD base window size N ∈ {2, 4} is configured by a higher layer parameter (valueOfN). Note that, in Rel. 16, W_{f,l} is always reported.

### (JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be nonoverlapping, partially overlapping (partial-overlapping), or fully overlapping (full-overlapping). When the overlap occurs, a PDSCH from one TRP interferes with a PDSCH from another TRP.

In Rel. 18, support of coherent joint transmission (CJT, mTRP CJT) using up to four TRPs has been under study. Data from four TRPs may be coherently precoded and transmitted to the UE on the same time-frequency resource. For example, the same precoding matrix may be used in consideration of channels from four TRPs. "Coherent" may mean that phases of a plurality of received signals have a certain relationship with each other. Signal quality may be improved by using 4-TRP joint precoding, and there may be no interference between the four TRPs. The data may receive only interference outside the four TRPs.

### (NCJT CSI/Type 1 Codebook)

In Rel. 17, a scenario allowing for application of an NCJT CSI report is single-DCI-based MTRP NCJT with the type 1 single-panel codebook. For NCJT CSI measurement, in single CSI-ReportConfig, two CMR groups with each channnel measurement resource (CMR) from one TRP can be configured. One CSI report mode can be configured from two modes.

By RRC signaling, CSI-ReportConfig for Rel-17 non-coherent joint transmission (NCJT) CSI configures a CMR and a CSI report mode (csi-ReportMode).

Two CMR groups with Kₛ = K₁+K₂ CMRs are configured for the UE. 2 ≤ Kₛ ≤ 8 holds. Kₛ CMRs correspond to the NZP-CSI-RS resource set for channel measurement. K₁ and K₂ are each the number of CMRs in two CMR groups. From selection out of all possible pairs, N (N sets of) CMR pairs (resource pairs) are configured by a higher layer. N = 1 and Kₛ = 2 are supported. Support of Nₘₐₓ = 2 is an optional feature of the UE. Support of K_{S,max} = X is an optional feature of the UE. Each CMR can include up to 32 CSI-RS ports, depending on a UE capability. Each CMR pair is associated with one CRI value.

The bitmap with RRC signaling indicates one CMR from each CMR group, and thereby indicates N (N = 1, 2) CMR pairs actually used for NCJT measurement. The UE measures single TRP CSI for TRP 1 and single TRP CSI for TRP 2 by using the CMRs in two CMR groups, and measures NCJT CSI by using N CMR pairs.

The UE selects one or more CSIs to be reported, based on the mode (CSI report mode) configured by csi-ReportMode. csi-ReportMode indicates one of two modes (NCJT CSI modes) of the following modes 1 and 2.

### - Mode 1

The UE may be configured to report X CSIs associated with a single-TRP measurement hypothesis and one CSI associated with an NCJT measurement hypothesis. X = 0, 1, 2. When X = 2, two CSIs are associated with two different single-TRP measurement hypotheses with a plurality of CMRs from a plurality of different CMR groups. Support of X = 1, 2 is an optional feature of the UE for the UE supporting option 1.

### - Mode 2

The UE is configured to report one CSI associated with the best one out of NCJT and single-TRP measurement hypotheses.

In mode 1, the UE reports X+1 CSIs as a total number, including X (X = 0, 1, 2) single TRP CSIs and one NCJT CSI. In mode 2, the UE reports one best CSI (one CSI) out of all the single TRP CSIs and one NCJT CSI.

In one CSI report, up to two single TRP CSIs and one NCJT CSI can be reported (mode 1 with X = 2). The NCJT CSI includes one CRI, two RIs (with one joint RI index), two PMIs, two LIs, and one CQI (four layers or less). The single TRP CSI is the same as existing CSI, and includes one CRI, one RI/PMI/LI, and one or two CQIs (eight layers or less, one CQI for each CW).

For the following some cases, new mapping orders (tables) of a plurality of fields in one CSI report are defined.
- Mapping order of wideband CSI for mode 1 with X = 0. The wideband CSI is supported only for mode 1 with X = 0, that is, the NCJT CSI.
- Mapping order of CSI part 1 for modes 1 and 2.
- Mapping order of a CSI part 2 wideband for modes 1 and 2.
- Mapping order of a CSI part 2 subband for modes 1 and 2.

### (CJT CSI/Type 2 Codebook)

In an ideal case (where the four TRPs are collocated (assumed to be located at the same position)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the respective four TRPs to the UE are different from each other. Thus, it is difficult to perform the dynamic indication only by reporting one aggregated CSI indicating a joint channel matrix.

In consideration of operation for fallback to NCJT (that is, a single TRP), CSI per TRP (that is, single-TRP CSI such as NCJT CSI of Rel. 17) may also be considered.

Based on the assumption of ideal backhaul, synchronization, and the same number of antenna ports over a plurality of TRPs, CSI acquisition for coherent joint transmission (CJT) for FR1 and up to four TRPs is under study. For a CJT multi-TRP for FDD, improvement of the enhanced (Rel-16) type 2 codebook and the further enhanced (Rel-17) type 2 PS codebook is under study.

W₁ (matrix indicating SD DFT vectors)/W_{f} (matrix indicating FD DFT vectors) for respective TRPs may be the same or different from each other. Wₗ(NZCs) for the respective TRPs may be different from each other. W₁/W_{f}/Wₗ for the respective TRPs may be selected jointly or individually. It is preferable that different scenarios with different options are present for designs of W₁/W_{f}/Wₗ. W_{φ} may be reported as an individual content, or may be reported in Wₗ. These used policies relate to an arrangement scenario (for example, intra-site multi-TRP or inter-site multi-TRP).

For example, a precoding matrix for 4-TRP CJT CSI (codebook) may be indicated by W₁/W_{f}/Wₗ for the respective TRPs. W1 for the respective TRPs may be the same or different from each other, and may be selected jointly or individually. Wₗ for the respective TRPs may be different from each other, and may be selected jointly or individually. Wf for the respective TRPs may be the same or different from each other, and may be selected jointly or individually.

There are two codebook mode configurations for FD base selection. In mode 1, an i_{1,9} report is necessary in order to indicate an FD base offset for a j-th selected CSI-RS resource for j = 2, ..., N. In mode 2, the i_{1,9} report is not necessary. All the CSI-RS resources have the same FD base selection.
- Mode 1 is SD/FD base selection for each TRP/each TRP group. It permits independent FD base selection over N TRPs/TRP groups. For example, the codebook structure is given by the following expression. Here, N is the number of TRPs or TRP groups. $\left[\begin{matrix}{W}_{1 , 1} {{W}^{˜}}_{2 , 1} {W}_{f , 1}^{H} \\ ⋮ \\ {W}_{1 , N} {{W}^{˜}}_{2 , N} {W}_{f , N}^{H}\end{matrix}\right]$
- Mode 2 is SD base selection for each TRP/each TRP group (port group or resource) and joint/common FD base selection (over N TRPs/TRP groups). For example, the codebook structure is given by the following expression. Here, N is the number of TRPs or TRP groups. $\left[\begin{matrix}{W}_{1 , 1} {{W}^{˜}}_{2 , 1} {W}_{f}^{H} \\ ⋮ \\ {W}_{1 , N} {{W}^{˜}}_{2 , N} {W}_{f}^{H}\end{matrix}\right]$

In these two modes, detailed designs, such as parameter combination, base selection, TRP (group) selection, reference amplitude, and W₂ quantization, may be made common.

For an enhanced type 2 codebook for CJT (enhanced Type II codebook for CJT, Rel-18 type 2 CSI for CJT), the UE may be configured with the higher layer parameter codebookType set to 'typeII-CJT-r18'. For a further enhanced type 2 PS codebook for CJT (further enhanced Type II port selection codebook for CJT, Rel-18 type 2 PS CSI for CJT), the UE may be configured with the higher layer parameter codebookType set to 'typeII-CJT-PortSelection-r18'.

The UE can be configured with N_{TRP} ∈ {1, 2, 3, 4} CSI-RS resources in the resource set for channel measurement.

In the enhanced type 2 codebook for CJT, N_{L} ∈ {1, 2, 4} combination sets with the value of {L₁, ..., L_{N_TRP}} are configured by a higher layer parameter paramCombination-CJT-L-r18. The value of N_{L} is configured by a higher layer parameter numberOfSDCombinations.

In the further enhanced type 2 PS codebook for CJT, N_{L} ∈ {1, 2, 4} combination sets with the value of {α₁, ..., α_{N_TRP}} are configured by a higher layer parameter paramCombination-CJT-PS-alpha-r18. The value of N_{L} is configured by a higher layer parameter numberOfSDCombinations-PS.

The UE may be configured with a higher layer parameter restrictedCMR-Selection. If restrictedCMR-Selection is configured, the number N of selected CSI-RS resources is N_{TRP}. Otherwise, the UE expects to select N CSI-RS resources for 1 ≤ N ≤ N_{TRP}, and the selection is reported using a bitmap of N_{TRP} bits.

In selection/reporting of an SD beam, selection/reporting of an SD beam for each CSI-RS resource is applied.

In the enhanced type 2 codebook for CJT, the precoding matrix indicated by the PMI is determined from Σⱼ₌₁^{N}L_{σ_j} + Mᵥ vectors. Here, {σ₁, ..., σ_{N}} is indices of N CSI-RS resources selected in ascending order to satisfy 1 ≤ σ₁ < ... < σ_{N} ≤ N_{TRP}. NT_{RP} may be the number of CSI-RS resources configured for the CSI report, or may be the number of TRPs for CJT. {L_{σ_1,} ..., L_{σ_N}} is a corresponding value from selected combinations of {L₁, ..., L_{N_TRP}}.

For j = 1, ..., N and i = 0, 1, ..., L_{σ_j} - 1, L_{σ_j} vectors v_{m_1,f^(i),m_2,f^(i)} corresponding to the j-th selected CSI-RS resource are indicated/reported by i_{1,1} and i_{1,2}. Here, i_{1,1} and i_{1,2} are given by the following expression.
i_{1,1} = [i_{1,1,1} ... i_{1,1,N}]
i_{1,1,j} = [q_{1,j} q_{2,j}]
q_{1,j} ∈ {0, 1, ..., O₁ - 1}
q_{2,j} ∈ {0, 1, ..., O₂ - 1}
i_{1,2} = [i_{1,2,1} ... i_{1,2,N}]
i_{1,2,j} ∈ {0, 1, ..., C(N₁N₂, L_{σ_j}) - 1}

In the further enhanced type 2 PS codebook for CJT, the precoding matrix indicated by the PMI is determined from Σⱼ₌₁^{N}L_{σ_j} + M vectors. Here, {σ₁, ..., σ_{N}} is indices of N CSI-RS resources selected in ascending order to satisfy 1 ≤ σ₁ < ... < σ_{N} ≤ N_{TRP}. L_{σ_j} = K_{1,σ_j}/2 and K_{1,σ_j} = α_{σ_j}*P_{CSI-RS}. {α_{σ_1,} ..., α_{σ_N}} is a corresponding value from selected combinations of {α₁, ..., α_{N_TRP}}.

For j = 1, ..., N and i = 0, 1, ..., L_{σ_j} - 1, based on L_{σ_j} vectors v_{m_j^(i)}, K_{1,σ_j} ports are selected from P_{CSI-RS} ports of the j-th selected CSI-RS resource, and are indicated/reported by i_{1,2}. Here, i_{1,2} is given by the following expression.
i_{1,2} = [i_{1,2,1} ... i_{1,2,N}]
i_{1,2,j} ∈ {0, 1, ..., C(P_{CSI-RS}, L_{σ_j}) - 1}

In the present disclosure, a codebook for CJT, a type 2 codebook for CJT, an enhanced type 2 codebook for CJT, a Rel-18 type 2 codebook for CJT, typeII-CJT-r18, a further enhanced type 2 PS codebook for CJT, a Rel-18 type 2 PS codebook for CJT, and typeII-CJT-PortSelection-r18' may be used interchangeably.

### (Doppler CSI/Type 2 Codebook)

It is studied to enhance/enhance capability of the CSI report for the UE that moves at a high speed/intermediate speed by using time-domain correlation/Doppler-domain (DD) information. For example, studies have been carried out on improvement of the enhanced (Rel-16) type 2 codebook and the further enhanced (Rel-17) type 2 PS codebook and reporting of time domain channel properties (time domain correlation profile) measured via a tracking CSI-RS (tracking RS (TRS)) from the UE without changing spatial domain bases and frequency domain bases.

Channel coherent time (CCT) is dependent upon a maximum Doppler shift. The channel coherent time is time in which the measured channel properties are available or time until the measured channel properties become no longer available (channel aging). The maximum Doppler shift is estimated based on a relative speed between a transmitting device and a receiving device. The channel coherent time T_{c} is approximated by 1/Δfₘₐₓ. Here, Δfₘₐₓ = v/λ. As the moving speed of the UE is higher, the channel coherent time is shorter. For example, in a carrier frequency of 4.5 GHz, when the moving speed exceeds approximately 25 km/h, the channel coherent time falls below 10 ms. How to address such a high moving speed and a short channel coherent time poses a problem.

To follow the Doppler shift, the TRS is supported. However, the TRS has the following problems.
- The number of ports per CSI-RS resource set is limited to only one. Each CSI-RS resource uses a single port.
- A configurable period is 10 ms or more.
- The CSI report for the TRS is not assumed. There is no report configuration for the P-TRS. Although a report can be configured, the report quantity (reportQuantity) is set only to 'none'. Up to 16 CSI-RS resources are used per CSI-RS resource set.

The TRS is mapped to time domain and frequency domain resources. For measurement of influence due to the Doppler shift, a plurality of RSs in the time domain are required in specific frequency domain resources.

For measurement of influence due to the Doppler shift, using the CMRs is considered. However, the RS used for measurement is dependent upon implementation of the UE.

In quantity of the CSI report, information related to the Doppler shift is not supported. Information for determination of W = W₁W₂ is reported by the UE via a CSI codebook (PMI). Here, W₁ is wideband property, and indicates a spatial beam. W2 is subband property, and indicates a coefficient of amplitude/phase for each spatial beam.

Regarding measurement related to the Doppler shift, case 1 in which the UE performs measurement based on the CSI-RS and case 2 in which the base station performs measurement based on the SRS are considered. Regarding determination of influence related to the Doppler shift, case 1-1 in which the UE performs determination based on CSI-RS measurement results, case 1-2 in which the base station performs determination based on CSI-RS measurement results reported by the UE, and case 2-1 in which the base station performs determination based on SRS measurement results are considered.

A CSI-RS measurement window and a CSI reporting window are under study. In the CSI-RS measurement window, one or more CSI-RS occasions may be measured. A reported CSI may be associated with the CSI reporting window.

The length (number of DD/TD bases) of the Doppler-domain (DD)/time-domain (TD) base vectors (DFT base vectors) may be represented by N₄, assuming the CSI report in slot n. In the CSI measurement window of slot[k, k + Wₘₑₐₛ - 1], one or more CSI occasions for calculation of the CSI report may be measured. Here, k may be a slot index, and Wₘₑₐₛ may be a measurement window length (the number of slots). The CSI occasion may be configured in CSI-ReportConfig. The CSI reporting window of slot[l, l + W_{CSI} - 1] may be associated with the CSI report in the slot n. Here, l may be a slot index, and W_{CSI} may be a reporting window length (the number of slots). The position of a CSI reference resource may be represented by n_{ref}.

Duration of the CSI reporting window is W_{CSI} = dN₄. d and N₄ are determined by a CMR configuration. A starting point of the CSI reporting window is slot l. l = (n - N_{CSI,ref}) may hold. l = (n + δ) may hold. δ = {0, 2} may hold, or δ = {0, 1, 2} may hold.

d slots may be duration in DD units.

When the UE-side prediction is assumed, it is supported that the UE predicts CSI/channel after slot l, and the base station configures the position of the slot l (from a plurality of candidate values) via higher layer signaling. A plurality of candidates of the slot l position include existing CSI reference resource positions (n - N_{CSI,ref}) and (n + δ). Here, δ > 0. The existing CSI reference resource in existing operation, i.e., (n - N_{CSI,ref}), is reused/reapplied to indicate the position of the last CSI-RS occasion used for the CSI report.

For the parameter δ, additional value 2 is supported.

N₄ is configured by the base station via higher layer signaling.

In N₄ = 1, the DD base may be the same (identity). There may not be DD compression. The codebook structure in this case may be the following expression, for example. $W = {W}_{1} {{W}^{˜}}_{2} {\left({W}_{f}\right)}^{H}$

In N₄ > 1, the Doppler-domain orthogonal DFT bases may be selected in common for all the SD/FD bases. The codebook structure in this case may be the following expression, for example. $W = {W}_{1} {{W}^{˜}}_{2} {\left({W}_{f}⊗{W}_{d}\right)}^{H}$

Only Q > 1 indicating the number of selected Doppler-domain (DD) base vectors is permitted. Detailed designs of the SD/FD bases, including an associated UCI parameter, follow existing specifications.

For an enhanced type 2 codebook for a predicted PMI (enhanced Type II codebook for predicted PMI, Rel-18 type 2 CSI for a predicted PMI), the UE may be configured with the higher layer parameter codebookType set to 'typeII-Doppler-r18'. For a further enhanced type 2 PS codebook for a predicted PMI (further enhanced Type II port selection codebook for predicted PMI, Rel-18 type 2 PS CSI for a predicted PMI), the UE may be configured with the higher layer parameter codebookType set to 'typeII-Doppler-PortSelection-r18'.

In the present disclosure, a Doppler codebook, a Doppler type 2 codebook, an enhanced type 2 codebook for a predicted PMI, Rel-18 type 2 CSI codebook for a predicted PMI, typeII-Doppler-r18, a further enhanced type 2 PS codebook for a predicted PMI, a Rel-18 type 2 PS codebook for a predicted PMI, and typeII-Doppler-PortSelection-r18 may be used interchangeably.

### (CSI-RS)

In Rel. 15, a CSI-RS is used as a DL RS for at least one of channel state information (CSI) acquisition, beam management (BM), beam failure recovery (BFR), and fine tracking of time and frequency, for example. The CSI-RS supports 1, 2, 4, 8, 12, 16, 24, and 32 ports (antenna ports, CSI-RS ports). The CSI-RS supports periodic, semi-persistent, and aperiodic transmission. In order to adjust overhead and CSI estimation accuracy, frequency density of the CSI-RS can be configured.

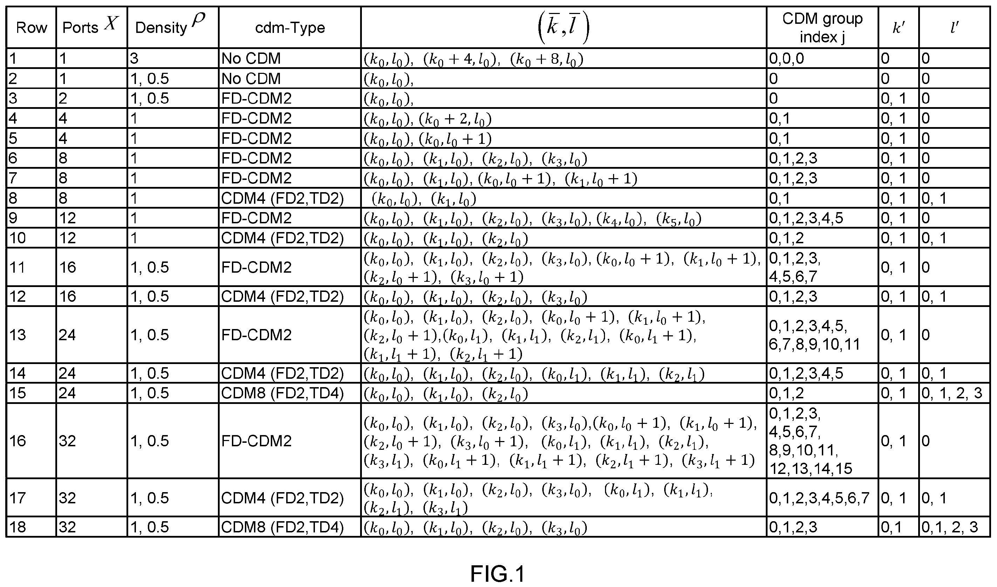

FIG. 1 is a diagram (CSI-RS location table) to show an example of CSI-RS locations in a slot. Rows of the CSI-RS location table indicate a row number, the number of ports, density of the frequency domain, a CDM type, time and frequency (time/frequency) locations (locations of component resources (k bar, l bar)), a code division multiplexing (CDM) group index, and resource locations in component resources ((REs, symbols), (k', l')). Here, the time/frequency locations are locations of time and frequency resources (component resources) of the CSI-RS corresponding to one port. k bar is a notation with an overline attached over "k". k bar indicates a start resource element (RE) index of a component resource, and l bar indicates a start symbol (OFDM symbol) index of the component resource.

Examples of a CDM group include no CDM (without CDM, N/A), FD-CDM2, CDM4, and CDM8. In FD-CDM2, the CSI-RS having two ports is multiplexed on the same time and frequency by multiplying a frequency domain (FD)-orthogonal cover code (OCC) having a length of 2 in units of REs (FD2). In CDM4, the CSI-RS having four ports is multiplexed on the same time and frequency by multiplying an FD-OCC having a length of 2 and a time domain (TD)-OCC having a length of 2 in units of REs and units of symbols (FD2TD2). In CDM8, the CSI-RS having eight ports is multiplexed on the same time and frequency by multiplying an FD-OCC having a length of 2 and a TD-OCC having a length of 4 in units of REs and units of symbols (FD2TD4).

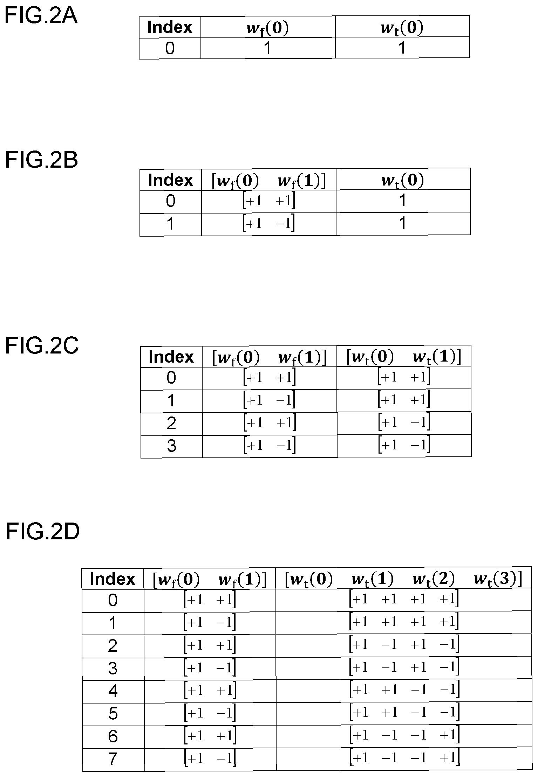

FIG. 2A to FIG. 2D are diagrams to show examples of the FD-OCC and the TD-OCC. A sequence of the FD-OCC is represented by w_{f}(k'), and a sequence of the TD-OCC is represented by wₜ(k'). FIG. 2A shows a case in which the CDM type is no CDM. FIG. 2B shows a case in which the CDM type is FD-CDM2. FIG. 2C shows a case in which the CDM type is CDM4. FIG. 2D shows a case in which the CDM type is CDM8.

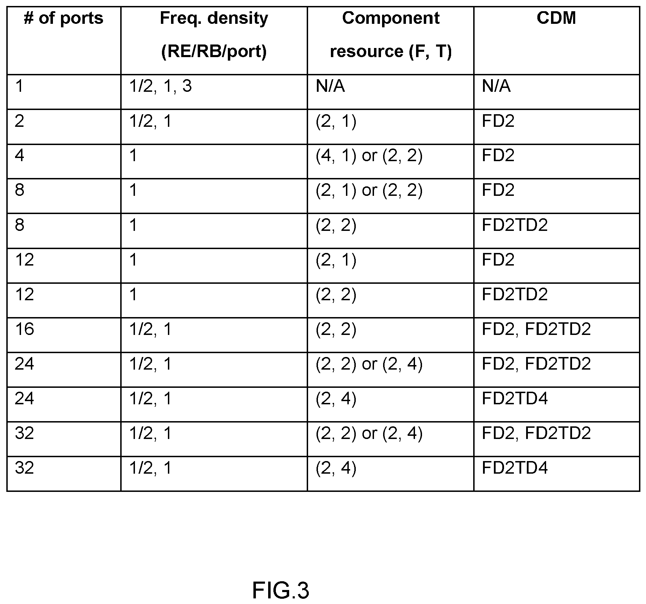

FIG. 3 is a diagram to show an example of CSI-RS locations for each number of ports, based on the CSI-RS location table. The figure shows frequency density, a component resource size (a size in the frequency direction [REs], a size in the time direction [symbols]), and a CDM type for each number of ports.

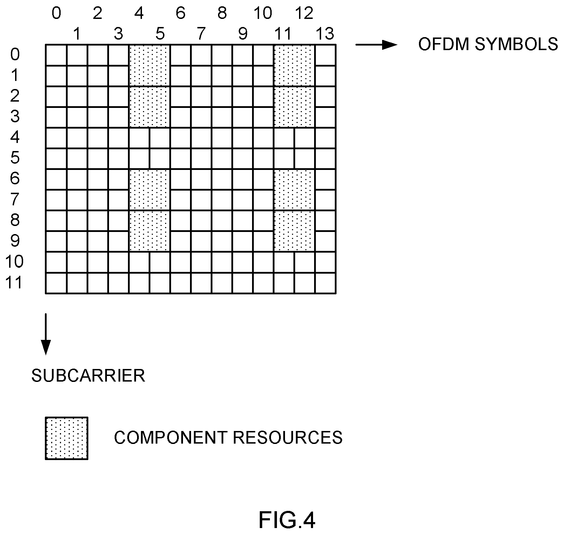

For example, FIG. 4 shows an example of resource element (RE) mapping of the CSI-RS with the number of ports being configured to 32 and the component resource size being configured to two subcarriers × two symbols (row index 17 of the CSI-RS location table). When four of the component resources of two subcarriers × two symbols are multiplexed (frequency division multiplexed (FDMed)) in the frequency domain and two of the component resources are multiplexed (time division multiplexed (TDMed)) in the time domain in the frequency domain and the time domain of one physical resource block (PRB) × one slot, 4 × 2 component resources are mapped. Furthermore, when the CSI-RS in each component resource is multiplied by the FD-OCC having a length of two subcarriers and the TD-OCC having a length of two symbols, four CSI-RSs are multiplexed (code division multiplexed (CDMed)) (CDM4, FD2TD2). Thus, the CSI-RS having 32 ports are transmitted in a resource of one PRB × one slot.

When the maximum number of ports of the CSI-RS, which is 32, is larger than the maximum number of layers, which is 8, the UE can measure more channel states, and measurement accuracy can be enhanced.

In Rel. 19 or later versions, massive MIMO using more than 32 ports is under study.

### (Base Station Antenna Layout)

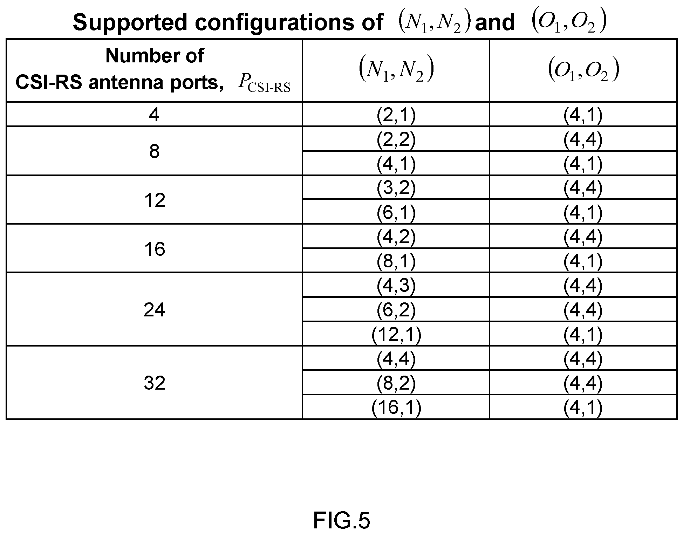

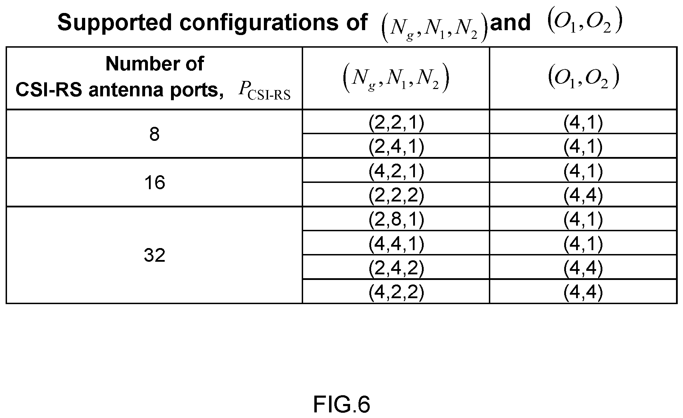

FIG. 5 shows association (table) between the number of supported CSI-RS ports and the base station antenna layout (configurations of (N₁, N₂) and (O₁, O₂)) for a single panel of an existing specification. FIG. 6 shows association (table) between the number of supported CSI-RS ports and the base station antenna layout (configurations of (N_{g}, N₁, N₂) and (O₁, O₂)) for a multi-panel of an existing specification.

### (Contents of CSI Report)

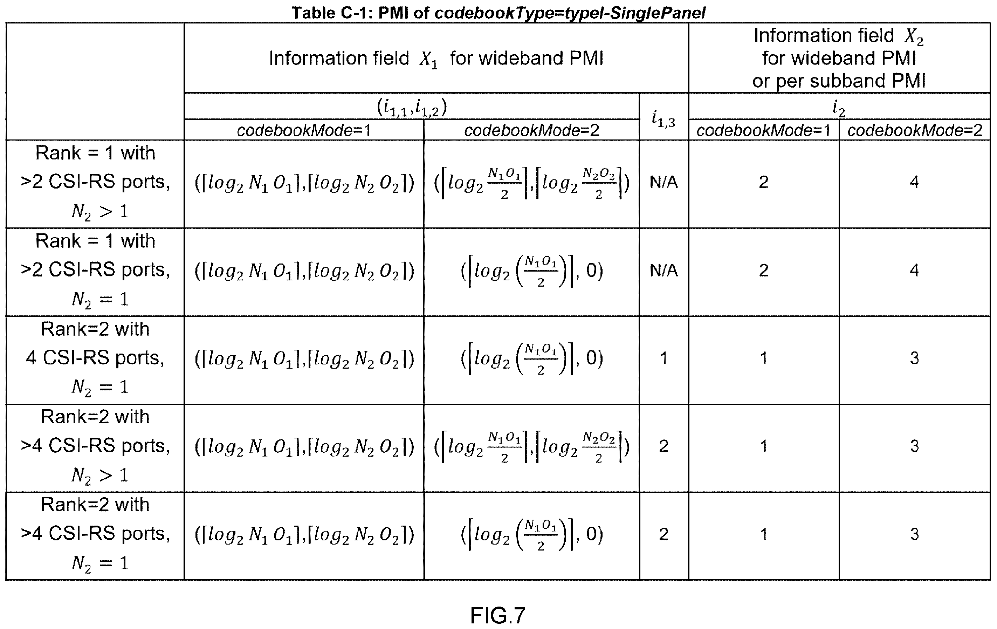

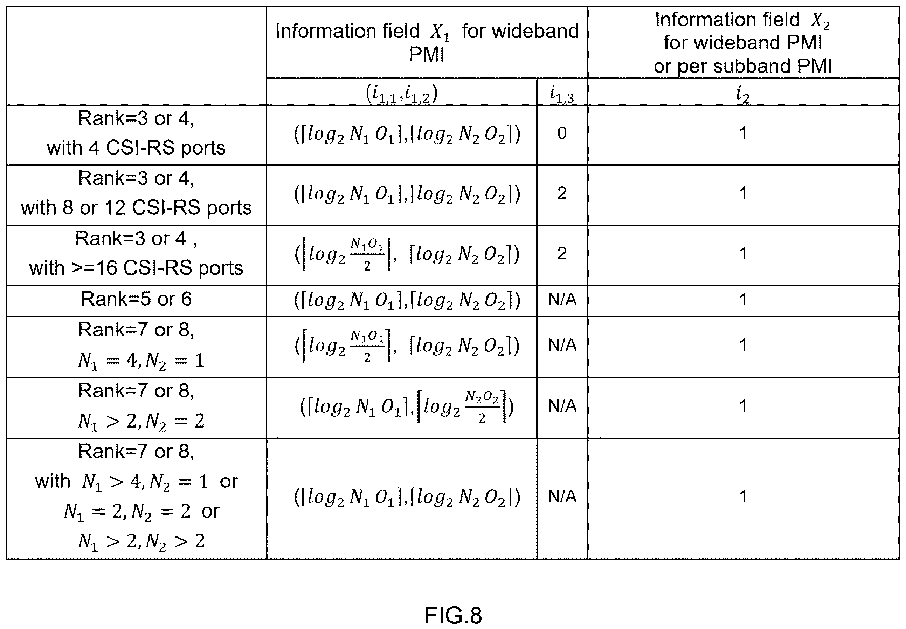

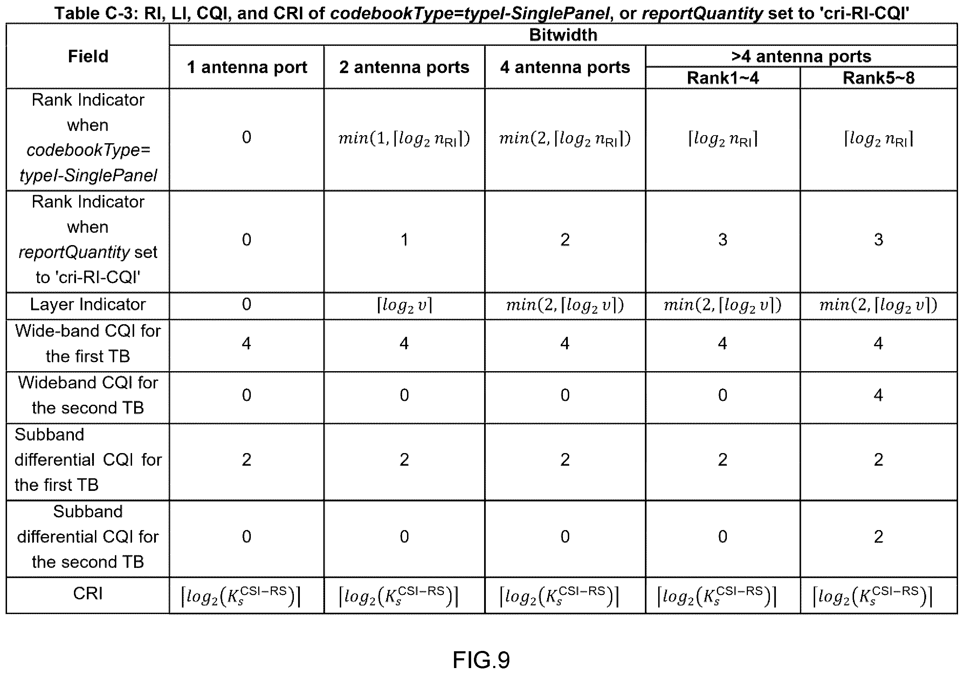

For the type 1 single-panel codebook, sizes of fields in the CSI report is defined in a specification. FIG. 7 and FIG. 8 (Table C-1) illustrate field sizes (bit width) of the PMI (codebookType = typeI-SinglePanel). FIG. 9 (Table C-3) shows field sizes of RI/LI/CQI/CRI (reportQuantity set to codebookType = typeI-SinglePanel or 'cri-RI-CQI').

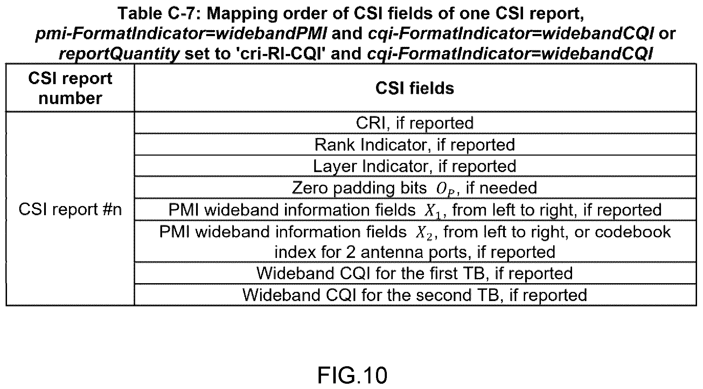

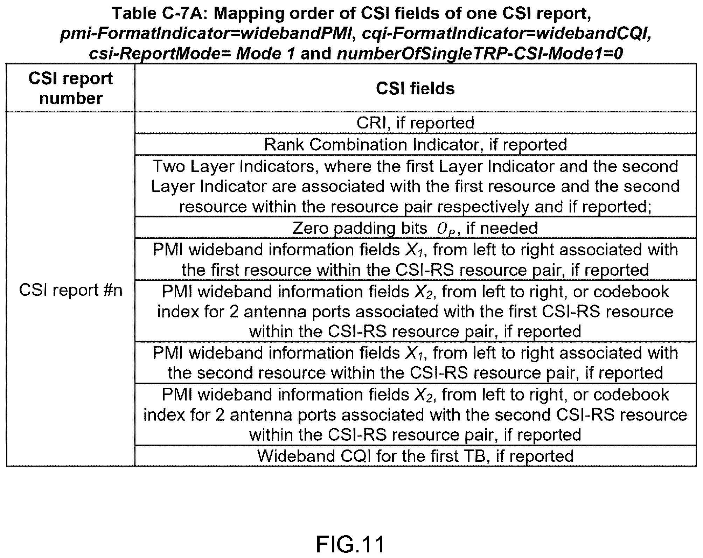

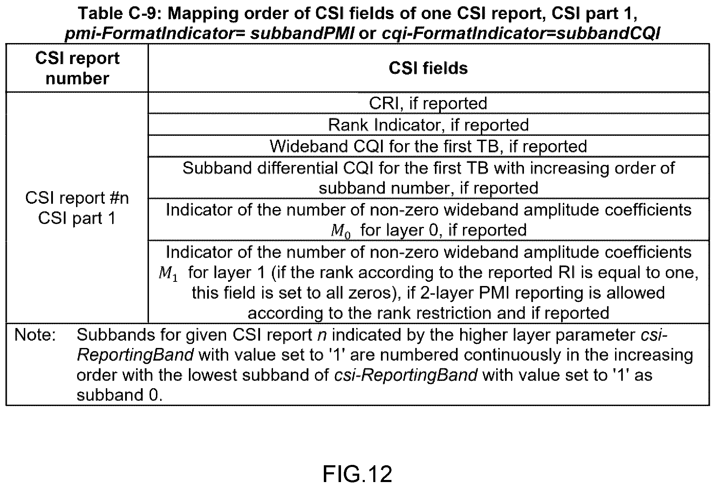

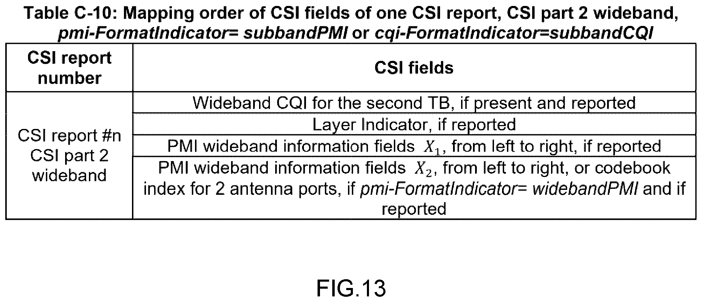

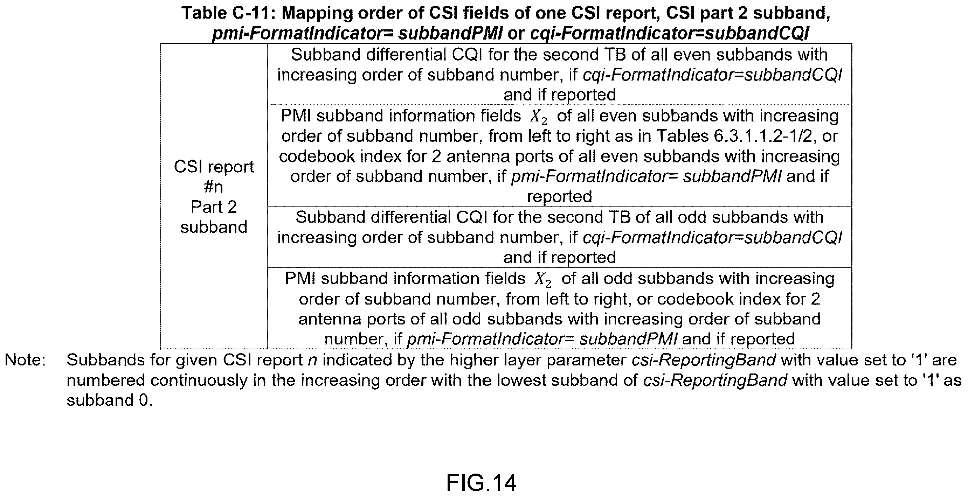

A mapping order of the type 1 single-panel codebook is defined in a specification. FIG. 10 (Table C-7) shows a mapping order of CSI fields in a wideband CSI report (pmi-FormatIndicator = widebandPMI and cqi-FormatIndicator = widebandCQI, or reportQuantity set to 'cri-RI-CQI' and cqi-FormatIndicator = widebandCQI). FIG. 11 (Table C-7A) shows a mapping order of CSI fields in a wideband CSI report (pmi-FormatIndicator = widebandPMI, cqi-FormatIndicator = widebandCQI, csi-ReportMode = Mode1 and numberOfSingleTRP CSI-CSI-Mode1 = 0). FIG. 12 (Table C-9) shows a mapping order of CSI fields of CSI part 1 in a subband CSI report (pmi-FormatIndicator = subbandPMI or cqi-FormatIndicator = subbandCQI). FIG. 13 (Table C-10) shows a mapping order of CSI fields of CSI part 2 wideband in the subband CSI report (pmi-FormatIndicator = subbandPMI or cqi-FormatIndicator = subbandCQI). FIG. 14 (Table C-11) shows a mapping order of CSI fields of CSI part 2 subband in the subband CSI report (pmi-FormatIndicator = subbandPMI or cqi-FormatIndicator = subbandCQI).

### (Study)

In the existing CSI reporting based on type-1 codebook, when a plurality of CSI-RS resources are configured, the UE selects and reports one CRI, and reports RI/LI/PMI/CQI corresponding to the reported CSI-RS resource (CRI).

In a case of hybrid beamforming, when a network (NW) is to perform multi-user (MU) pairing for a specific CSI-RS resource, the NW has CSI from a plurality of UEs for the same CSI-RS resource. When different UEs select and report different CSI-RS resources, it is difficult for the NW to perform MU pairing.

By extension of the CRI-based reporting, it is conceivable to ask a plurality of UEs to select and report a plurality of CRIs and report the RI/LI/PMI/CQI corresponding to each selected CSI-RS resource (CRI).

Several issues are considered:
- Issue 1: How to configure and report a plurality of CRIs in one CSI direction. For example, a bit size for a plurality of CRIs.
- Issue 2: How a mapping order of a plurality of pieces of CSI corresponding to a plurality of CRIs is determined.
- Issue 3: Whether there is any relationship/constraint for a plurality of pieces of CSI corresponding to a plurality of CRIs.
- Issue 4: How zero power (ZP) - interference measurement resource (IMR)/non-zero power (NZP) - IMR is configured.

In this way, unless studies on reporting of a plurality of CRIs is sufficient, degradation in communication quality, throughput reduction may occur.

In view of this, the inventors of the present invention came up with the idea of a method of reporting a plurality of CRIs in one CSI report.

### (Various interchangeable uses and so on)

Embodiments according to the present disclosure will be described in detail with reference to the drawings as follows. Note that the embodiments (for example, the cases) described below may each be used individually, or at least two of them may be combined to be applied.

In the present disclosure, "A/B" and "at least one of A and B" may be used interchangeably. In the present disclosure, "A/B/C" may mean "at least one of A, B, and C".

In the present disclosure, activate, deactivate, indicate, select, configure, update, determine, and the like may be used interchangeably. In the present disclosure, "support", "control", "controllable", "operate", "operable", and the like may be used interchangeably.

In the present disclosure, radio resource control (RRC), an RRC parameter, an RRC message, a higher layer parameter, an information element (IE), a configuration, and the like may be used interchangeably. In the present disclosure, a Medium Access Control control element (MAC Control Element (CE)), an update command, an activation/deactivation command, and the like may be used interchangeably.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be used interchangeably.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having a capability of" and "supporting/reporting a capability of", may be used interchangeably.

In the present disclosure, ceil(x) and a ceiling function may be used interchangeably. In the present disclosure, floor(x) and a floor function may be used interchangeably. In the present disclosure, sqrt(x) and the root may be used interchangeably. In the present disclosure, x mod y, mod (x, y), a mod function, and a modulo operation may be used interchangeably. In the present description, Σ_{I} = _{M}^{N}f(i), the summation of f(i) over i = M, M + 1, ..., N, f(M) + f(M + 1) +. + f(N), may be used interchangeably. C(n, k) may be used interchangeably as the number of combinations (combinatorial coefficient) of selecting k values from n values, binomial coefficients, ₙCₖ and Cₙ^{k}.

In the present disclosure, a_{b}, a_b, and a notation in which b is attached to a at the lower right may be used interchangeably. In the present disclosure, a^{c}, a^c, and a notation in which c is attached to a at the upper right may be used interchangeably. In the present disclosure, a_{b}^{c}, a_b^c, and a notation in which b is attached to a at the lower right and c is attached thereto at the upper right may be used interchangeably. In the present disclosure, x^{~} may be expressed by adding "~" above x, or may be referred to as x tilde. In the present disclosure, x⁻ may be expressed by adding "-" above x, or may be referred to as x bar.

In the present disclosure, a port, a CSI-RS port, and an antenna port may be used interchangeably. In the present disclosure, a CSI-RS resource, an NZP CSI-RS resource, CSI-RS resource for channel measurement, CMR, CSI-RS configuration, and a time and frequency resource for a CSI-RS may be used interchangeably. In the present disclosure, a CSI-RS resource set, an NZP CSI-RS resource set, a CSI-RS resource set for channel measurement, and a CMR set may be used interchangeably.

In the present disclosure, a beam, an SD beam, a spatial domain index, (i_{1,1}, i_{1,2}), (l, m), precoding, a precoder, quasi co-location (QCL), QCL assumption, a QCL relationship, a transmission configuration indicator (TCI) state, a spatial domain filter, a spatial domain reception filter, a spatial domain transmission filter, a reference signal (RS), and a spatial reception parameter may be used interchangeably.

In the present disclosure, an existing CSI-RS resource and a Rel-15 CSI-RS resource may be used interchangeably. An additional CSI-RS resource, a CSI-RS resource absent in Rel. 15, and a CSI-RS resource introduced in a new release may be used interchangeably.

In the present disclosure, a CSI-RS using more than 32 ports, an enhanced CSI-RS, and an enhanced CSI-RS port may be used interchangeably. In the present disclosure, a CSI-RS using 32 or less ports, an existing CSI-RS, and an existing CSI-RS port may be used interchangeably.

In the present disclosure, a report quantity, a report content, a parameter, an index, and a field may be used interchangeably.

### (Radio Communication Method)

### <Embodiment 0>

A specific type of codebook/CSI with more than one CRI report within one CSI report may be supported/configured. The one CSI report may include RI/LI/PMI/CQI corresponding to each CRI to be reported. The specific type may be at least one of the following several types.
- Rel-15 type 1 CSI (type 1 single-panel codebook)
- Rel-15 type 1 multi-panel CSI (type 1 multi-panel codebook)
- Rel-15 type 2 CSI (type 2 codebook)
- Rel-15 type 2 PS CSI (type 2 port selection codebook)
- Rel-16 type 2 CSI (enhanced type 2 codebook)
- Rel-16 type 2 PS CSI (enhanced type 2 port selection codebook)
- Rel-17 type 2 PS CSI (further enhanced type 2 port selection codebook)
- Rel-18 Type 2 Doppler CSI (Extended Type 2 Port Selection Codebook for Predictive PMI)
- Rel-18 type 2 Doppler PS CSI (enhanced type 2 port selection codebook)

The at least one type with more than one CRI report within one CSI report and a plurality of CSI-RS resources with more than 32 ports for channel measurement may be supported/configured. The one CSI report may include RI/LI/PMI/CQI corresponding to each reported CRI.

Individual/separate UE capabilities may be defined/reported for supporting reporting of more than one CRI (RI/LI/PMI/CQI corresponding to each CRI) in one CSI report using CSI-RS using 32 or fewer ports, and supporting reporting of more than one CRI (RI/LI/PMI/CQI corresponding to each CRI) in one CSI report using CSI-RS using more than 32 ports.

A common/joint UE capability may be defined/reported for supporting reporting of more than one CRI (RI/LI/PMI/CQI corresponding to each CRI) in one CSI report using CSI-RS using 32 or less ports, and supporting reporting of more than one CRI (RI/LI/PMI/CQI corresponding to each CRI) in one CSI report using CSI-RS using more than 32 ports.

The reporting of more than one CRI (RI/LI/PMI/CQI corresponding to each CRI) in one CSI report using the CSI-RS using 32 or less ports and the reporting of more than one CRI (RI/LI/PMI/CQI corresponding to each CRI) in one CSI report using the CSI-RS using more than 32 ports may be configured individually/separately.

The reporting of more than one CRI (RI/LI/PMI/CQI corresponding to each CRI) in one CSI report using a CSI-RS using 32 or less ports and the reporting of more than one CRI (RI/LI/PMI/CQI corresponding to each CRI) in one CSI report using a CSI-RS using more than 32 ports may be configured in common/jointly.

According to the present embodiment, the UE/base station can determine appropriate CSI computation time for the enhanced CSI-RS.

### <Embodiment 1>

A new RRC parameter (for example, cri-rnh-r19) may be introduced to indicate whether the UE is required to report more than one CRI in one CSI report. The one CSI report may include RI/LI/PMI/CQI corresponding to each CRI to be reported.

When the UE is required to report more than one CRI in one CSI report, K_{S}^{CSI-RS} CSI-RS resources may be configured in the CSI-RS resource set for channel measurements.

The UE may follow at least one of the following some options 1-x.
- Option 1-1: The number of CRIs to be reported can be configured by a new RRC parameter (for example, no-cri-r19). For example, no-cri-r19 may indicate X, and X may be X = 1, 2, 3, and 4. The UE may select and report X CRIs from the configured K_{S}^{CSI-RS} CSR-RS resources.
- Option 1-2: The maximum number of CRIs to be reported may be configurable by a new RRC parameter (for example, max-no-cri-r19). For example, max-no-cri-r19 may indicate X, and X may be X = 1, 2, 3, and 4. The UE may select Y (= 1, 2, ..., X - 1, or X) CRIs from the configured K_{S}^{CSI-RS} CSI-RS resources and report the selected CRIs. In option 1-2, the actual number of CRIs reported may be determined by the UE.
- Option 1-3: The number of CRIs reported may be configurable by a new RRC parameter (for example, max-no-cri-r19). For example, max-no-cri-r19 may indicate X, and X may be X = 1, 2, 3, and 4. Another new RRC parameter (for example, dynamic-selection-r19) may provide for enabling or disabling the UE's dynamic selection/decision of the number of CRIs reported. When dynamic-selection-r19 is disabled ('disabled'), the UE may report X CRIs (as in option 1-1). When dynamic-selection-r19 is enabled ('enabled'), the UE may report Y (= 1, 2,., X - 1, or X) CRIs (as in option 1-2). The dynamic-selection-r19 may be a configuration of switching between option 1-1 and option 1-2, or may be a configuration of enabling option 1-2.

The K_{S}^{CSI-RS} CSI-RS resources configured may have some constraints. For example, the configured K_{S}^{CSI-RS} CSI-RS resources may have the same port number.

### <<Details of Option 1-1>>

The size (bit-width) of the X CRIs (X fields) reported may be at least one of the following some options 1-1x.
-- Option 1-1A: X * log₂ (K_{S}^{CSI-RS}) bits. This option means that the UE selects each CRI from K_{S}^{CSI-RS} CMRs.
-- Option 1-1B: log2 (K_{S}^{CSI-RS}) + log₂ (K_{S}^{CSI-RS} - 1) + log₂ (K_{S}^{CSI-RS} - 2) ... + log₂ (K_{S}^{CSI-RS} - X + 1) bits. This option means that the UE selects the first CRI from the K_{S}^{CSI-RS} CMRs, the second CRI from the (K_{S}^{CSI-RS} - 1) CMRs, the third CRI from the (K_{S}^{CSI-RS} - 2) CMRs, and so on.
-- Option 1-1C: log₂ (C (K_{S}^{CSI-RS}, X)) bits. This option means that there are C (K_{S}^{CSI-RS}, X) candidates to choose X CRIs from the K_{S}^{CSI-RS} CMRs. The UE reports one of the candidates.

In the present disclosure, log₂ (x) and ceil (log₂ (x)) may be used interchangeably. In the present description, log₂ (x) + log₂ (y), ceil (log₂ (x) + log₂ (y)), and ceil (log₂ (x)) + ceil (log₂ (y)) may be used interchangeably.

In a case of K_{S}^{CSI-RS} = 8 and X = 4, according to option 1-1A, the size required for CRI reporting is 4 * 3 = 12 bits, according to option 1-1B, the size required for CRI reporting is 3 + 3 + 3 + 3 = 12 bits, and according to option 1-1C, the size required for CRI reporting is log₂ 70 = 7 bits.

In a case of K_{S}^{CSI-RS} = 8 and X = 2, according to option 1-1A, the size required for CRI reporting is 2 * 3 = 6 bits, according to option 1-1B, the size required for CRI reporting is 3 + 3 = 6 bits, according to option 1-C, the size required for CRI reporting is log₂ 28 = 5 bits.

### <<Details of Option 1-2>>

The reporting of up to X CRIs reported may follow at least one of the following some options 1-2x.
-- Option 1 2A: Two fields are used for CRI reporting. The first field may report the actual number of CRIs (for example, Y) reported by the UE. The second field may report Y CRIs. Any one of the above-described options 1- 1A to 1-1C may be applied to the size of the second field. In this case, the size of the second field may be variable. The second field may be placed in the CSI part 2.
-- Option 1-2B: One field of log₂ (∑ₓ₌₁^{X} C (K_{S}^{CSI-RS}, x)) bits is used for CRI reporting. This option means that there are ∑ₓ₌₁^{X} C (K_{S}^{CSI-RS}, x) candidates to select Y (= 1, 2, ..., X - 1, or X) CRIs from the K_{S}^{CSI-RS} CMRs. The UE reports one of the candidates.

In the case of K_{S}^{CSI-RS} = 8 and X = 4, according to option 1-2A, the size of the first field is 2 bits,
according to option 1-1A, the size of the second field is 12 bits, according to option 1-1B, the size of the second field is 12 bits, and according to option 1-1C, the size of the second field is 7 bits. According to option 1-2B, the size of field is log₂ 162 = 8 bits.

In the case of K_{S}^{CSI-RS} = 8 and X = 2, according to option 1-2A, the size of the first field is 1 bit, according to option 1-1A, the size of the second field is 6 bits, according to option 1-1B, the size of the second field is 6 bits, and according to option 1-1C, the size of the second field is 5 bits. According to option 1-2B, the size of field is log₂ 36 = 6 bits.

### <Variations of Embodiment 1>

Within the CSI-RS resource set for channel measurement, X subsets of CSI-RS resources may be configured. Each subset may have K_{S}^{CSI-RS} CSI-RS resources. The UE may follow at least one of the following some options 1a-.
- Option 1a-1: The UE selects X CRIs from the X subsets to report. The UE may select one CRI from one subset. The size of CRI report may be X * log₂ (K_{S}^{CSI-RS}) bits.
- Option 1a-2: The UE selects and reports Y (= 1, 2, ..., X - 1, or X) CRIs from the X subsets. The UE may select one CRI from one subset. In option 2, the actual number of CRIs reported is decided by the UE. The size of CRI report may follow at least one of the following some options 1a-2x.
   -- Option 1a-2A: The first field may be used. The first field may indicate which subset is selected by an X-bit bitmap. The first field may indicate one candidate from ∑ₓ₌₁^{X} C (X, x) candidates for selecting Y CRIs from X subsets by log₂ (∑ₓ₌₁^{X} C (X, x)) bits. A second field may be used to indicate the CRI in each selected subset. The second field may have a variable size. The second field may be placed in the CSI part 2.
   -- Option 1a-2B: X * log₂ (K_{S}^{CSI-RS} + 1) bits.
- Option 1a-3: A new RRC parameter (for example, dynamic-selection-r19) may provide for enabling or disabling the UE's dynamic selection of the number of CRIs to be reported. When dynamic-selection-r19 is disabled ('disabled'), the UE may report X CRIs (as in option 1a-1). When dynamic-selection-r19 is enabled ('enabled'), the UE may report Y (= 1, 2, ..., X - 1, or X) CRIs (as in option 1a-2). The dynamic-selection-r19 may be a configuration of switching between the option 1a-1 and the option 1a-2, or may be a configuration of enabling the option 1a-2.

The CSI-RS resources configured in the X subsets may have some constraints. For example, a plurality of CSI-RS resources configured in the X subsets may have the same port number.

According to this embodiment, the UE may report a plurality of CRIs within one CSI report.

### <Embodiment 2>

Another CSI part of the CSI part including the CRI may include RI/LI/PMI/CQI corresponding to the CRI. The size of the other CSI part may be a multiple of the actual number of CRIs reported. The actual number of CRIs reported may be X in Option 1-1 or Y from {1, 2, ..., X} in Option 1-2.

A CSI mapping order of a plurality of CRIs/a plurality of RIs/a plurality of LIs/a plurality of PMIs/a plurality of CQIs may be defined.

In extension based on a type 1 single-panel codebook, at least one of the foregoing tables C-1, C-3, C-7, and C-9 may be extended by using at least one mapping order of the following some options 2-x.
- Option 2-1: All report contents (report quantity) for the first reported CRI, all report contents (report quantity) for the second reported CRI, ..., all report contents (report quantity) for the X-th reported CRI.
- Option 2-2: For each reporting content (report quantity), values corresponding to a plurality of CRIs are placed in the order of the plurality of CRIs to be reported. The order of the report contents (report quantities) may be the same as the order of the existing (existing type 1 single-panel codebook report).

A mapping order (option 2-1/2) applied may be the same or different from each other for the aforementioned tables C-1, C-3, C-7, and C-9.

In extension of the type 1 single-panel codebook based on other Rel. 15/16/17/18 CSI/codebook types, the same mapping order as in Option 2-1/2-2 may be applied.

### <<Examples of Option 2-1>>

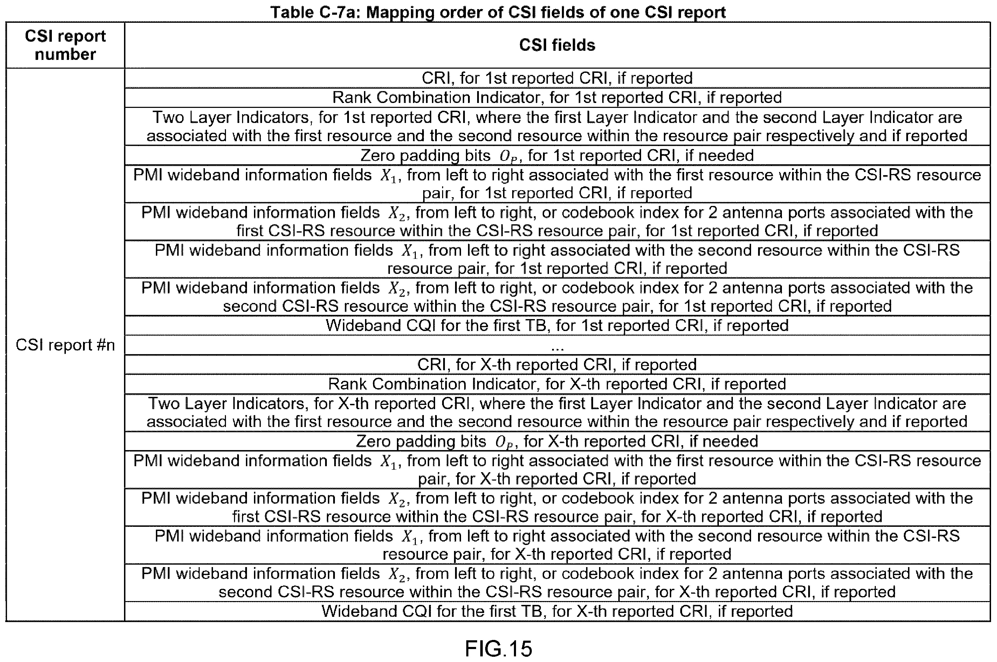

FIG. 15 shows an example (Table C-7a) of a mapping order of CSI fields in wideband CSI based on Table C-7/C-7a when X CRIs are reported. One CSI report #n may include X blocks in order. An i-th (i = 1, 2, ..., X) block may include at least one of the following some CSI fields.
- i-th CRI.
- A rank combination indicator for the i-th CRI.
- A two-layer indicator for the i-th CRI.
- Zero padding bits for the i-th CRI.
- A PMI wideband information field X₁ associated with the first resource in the CSI-RS resource pair for the i-th CRI.
- A PMI wideband information field X₂ associated with the first resource in the CSI-RS resource pair or the codebook index for the two antenna ports for the i-th CRI.
- A PMI wideband information field X₁ associated with the second resource in the CSI-RS resource pair for the i-th CRI.
- A PMI wideband information field X₂ associated with the second resource in the CSI-RS resource pair or a codebook index for the two antenna ports for the i-th CRI.
- A wideband CQI for the first TB for the i-th CRI.

### <<Examples of Option 2-2>>

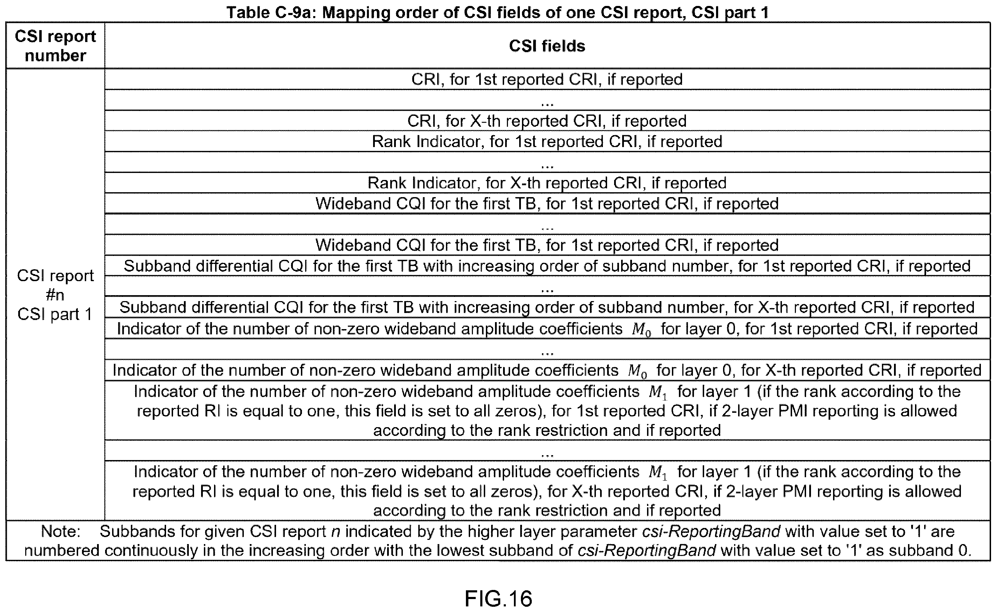

FIG. 16 shows an example (Table C-9a) of a mapping order of CSI fields in CSI part 1 of subband CSI based on Table C-9 when X CRIs are reported. The CSI part 1 of one CSI report #n may include a plurality of groups in order. One group may correspond to one report quantity of CSI. One group may include X CSI fields in order. An i-th (i = 1, 2, ..., X) CSI field in one block may indicate a value corresponding to an i-th CRI of the report quantity corresponding to the block. A plurality of groups may each correspond to at least one of the following some report quantities:
- A CRI.
- A RI.
- A wideband CQI for a first TB.
- A subband differential CQI for the first TB using ascending subband number order.
- Indicators of the number of non-zero wideband amplitude coefficients M₀ corresponding to layer 0.
- Indicators of the number of non-zero wideband amplitude coefficients M₁ corresponding to layer 1 when two-layer PMI reporting is allowed according to rank constraint. When a rank according to a reported RI is equal to 1, this field is set to all zeros.

A plurality of subbands indicated by the higher layer parameter csi-ReportingBand for a given CSI report n are numbered serially in ascending order including the lowest subband of csi-ReportingBand as subband 0.

According to this embodiment, the UE can appropriately report the report quantity other than the CRI when reporting a plurality of CRIs in one CSI report.

### <Embodiment 3>

Constraints on X CRIs reported and the other report quantities (such as RI/LI/PMI/CQI) for the CRIs may be defined in a specification or may be configurable by a new RRC parameter.

The constraints may include at least one of the following some options 3-x.
- Option 3-1: RI for the X selected/reported CRIs is the same. In Embodiment 2, for the X CRIs, only one common RI may need to be reported. In this case, reporting of X RIs may not be required.
- Option 3-2: LI for the X selected/reported CRIs is the same. In Embodiment 2, for the X CRIs, only one common LI may need to be reported. In this case, reporting of X LIs may not be needed. Option 3-2 may be applied together with Option 3-1.
- Option 3-3: Zero padding bits for X CRIs selected/reported are included in only one common field.
- Option 3-4: PMI wideband information field X₁ (or some of elements i_{x, y, z} in X₁) for X CRIs selected/reported is the same. In Embodiment 2, only one common X₁ may need to be reported for X CRIs. In this case, the reporting of X₁ the number of which is X may not be needed.
- Option 3-5: PMI wideband information field X₂ (or some of elements i_{x, y, z} in X₂) for X CRIs selected/reported is the same. In Embodiment 2, only one common X₂ may need to be reported for X CRIs. In this case, the reporting of X₂ the number of which is X may not be needed. Option 3-5 may be applied together with Option 3-4. For example, in extension based on type 2 or type 2 PS, FD bases for X CRIs may be the same, and i_{1, 6} for the X CRIs may be the same.
- Option 3-6: Indicators of the total number of non-zero coefficients for layer i' for the X CRIs selected/reported are the same. In Embodiment 2, only one common indicator of the total number of non-zero coefficients may need to be reported for the X CRIs. In this case, reporting of X indicators of the total number of non-zero coefficients may not be needed.

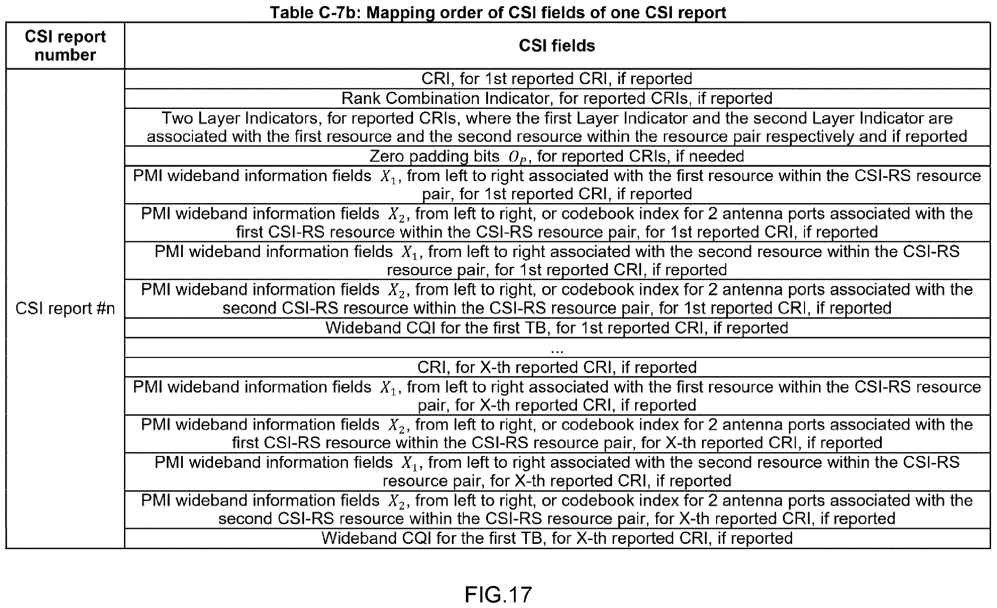

FIG. 17 shows an example (Table C-7b) of a mapping order of CSI fields in wideband CSI based on Table C-7/C-7A when X CRIs are reported. One CSI report #n may include X blocks in order.

The first block may include at least one of the following some CSI fields.
- A first CRI.
- A rank combination indicator for X CRIs.
- Two-layer indicator for X CRIs.
- A zero padding bit for X CRIs.
- A PMI wideband information field X₁ associated with the first resource in the CSI-RS resource pair for the first CRI.
- A PMI wideband information field X₂ associated with the first resource in the CSI-RS resource pair or a codebook index for the two antenna ports for the first CRI.
- A PMI wideband information field X₁ associated with the second resource in the CSI-RS resource pair for the first CRI.
- A PMI wideband information field X₂ associated with the second resource in the CSI-RS resource pair or a codebook index for the two antenna ports for the first CRI.
- A wideband CQI for the first TB for the first CRI.

The second and subsequent (i-th for i = 2, ..., X) blocks may include at least one of the following some CSI fields:
- An i-th CRI.
- A PMI wideband information field X₁ associated with the first resource in the CSI-RS resource pair for the i-th CRI.
- A PMI wideband information field X₁ associated with the second resource in the CSI-RS resource pair or the codebook index for the two antenna ports for the i-th CRI.
- A PMI wideband information field X₂ associated with the first resource in the CSI-RS resource pair for the i-th CRI.
- A PMI wideband information field X₂ associated with the second resource in the CSI-RS resource pair or a codebook index for the two antenna ports for the i-th CRI.
- A wideband CQI for the first TB for the i-th CRI.

According to this embodiment, the UE can appropriately report a plurality of CRIs and other report quantities for the CRIs in one CSI report.

### <Embodiment 4>

A ZP-IMR configuration for K_{S}^{CSI-RS} CMRs may follow at least one of the following some options 4-x.
- Option 4-1: Only one ZP-IMR is configured for all CMRs. This option is suitable for obtaining the same interference from another serving cell.
- Option 4-2: A plurality of CMRs and a plurality of ZP-IMRs are mapped one-to-one.
- Option 4-3: Both option 4-1 and option 4-2 are supported, and a NW can configure either option 4-1 or option 4-2.

When measuring the ZP-IMR, the UE may assume the same QCL/TCI as the QCL/TCI of a measured CMR.

The NZP-IMR configuration for the K_{S}^{CSI-RS} CMRs may follow at least one of the following some options 4-x.
- Option 4-4: Only one NZP-IMR is configured for all CMRs. This option is suitable for obtaining different multi-user (MU) interference.
- Option 4-5: A plurality of CMRs and a plurality of NZP-IMRs are mapped one-to-one.
- Option 4-6: Both option 4-4 and option 4-5 are supported, and the NW can configure either option 4-4 or option 4-5.

When measuring the NZP-IMR, the UE may assume the same QCL/TCI as the QCL/TCI of the measured CMR.

In the present disclosure, a ZP-IMR, a ZP CSI-RS for interference measurement, an IMR, a CSI-interference measurement (IM) resource, and a ZP-CSI-RS resource may be used interchangeably.

In the present disclosure, an NZP-IMR, an NZP CSI-RS for interference measurement, an IMR, an NZP CSI-RS resource for interference measurement, and an NZP CSI-RS resource may be used interchangeably.

According to this embodiment, the UE can perform appropriate interference measurement for channel measurement.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling. The specific condition may indicate at least one of the following:
- Enabling of at least one of the above embodiments is configured.
- More than 32 CSI-RS ports are configured.

At least one of the above-described embodiments may be applied only to a UE that has reported a specific UE capability or that supports the specific UE capability. The specific UE capability may indicate at least one of the following:
- Supporting specific processing/operation/control/information of at least one of the above embodiments.
- Supporting reporting of more than one CRI within one CSI report. To support reporting of more than one CRI and RI/LI/PMI/CQI corresponding to each CRI in one CSI report. The maximum number of more than one CRI in one CSI report.
- Using CSI-RS with more than 32 (for example, 48, 64, 68, 96, 108, 128) ports to support reporting of more than one CRI within one CSI report. To support reporting of more than one CRI and RI/LI/PMI/CQI corresponding to each CRI in one CSI report, by using CSI-RS with more than 32 ports. The maximum number of more than one CRI in one CSI report. The UE capability of extension based on each type of existing codebook/CSI in Embodiment 1 may be defined/reported separately.
- Supporting selection of the actual number of reported CRIs.
- Support selection/reporting of a plurality of CRIs from a plurality of subset configurations.
- Supporting the constraint (in Embodiment 2) of X reported CRIs.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- Information indicating enabling/disabling of the operation of the above embodiments.
- RRC parameters for a specific release (for example, Rel. 18/19). In Rel. YY (for example, YY is 18 or more), an RRC parameter for enabling an operation XXX may be represented as XXX_rYY or XXX-rYY.

When not supporting at least one of the specific UE capabilities or not configured with the specific information, the UE may apply operation of Rel. 15/16, for example.

### (Supplementary Note)

Regarding one embodiment of the present disclosure, the following supplementary notes of the invention will be given.

### {Supplementary Note 1}

A terminal comprising:
a receiving section that receives a configuration of a channel state information (CSI) report using a specific codebook; and
a control section that reports the CSI report including a plurality of CSI reference signal resource indicators (CRIs) and a plurality of values of a specific report quantity, based on the configuration, wherein
the plurality of values respectively correspond to the plurality of CRIs.

### {Supplementary Note 2}

The terminal according to supplementary note 1, wherein the configuration indicates a plurality of CSI-reference signal (RS) resources using more than 32 ports.

### {Supplementary Note 3}

The terminal according to supplementary note 1 or 2, wherein the configuration indicates at least one of a number of the plurality of CRIs, a maximum number of the plurality of CRIs, and enabling by the terminal to determine the number of the plurality of CRIs.

### {Supplementary Note 4}

The terminal according to any one of supplementary notes 1 to 3, wherein
the configuration indicates a plurality of CSI-RS resources, and
the control section selects the plurality of CRIs from the plurality of CSI-RS resources.

### (Supplementary Note)

Regarding one embodiment of the present disclosure, the following supplementary notes of the invention will be given.

### {Supplementary Note 1}

A terminal comprising:
a receiving section that receives a configuration of a channel state information (CSI) report; and
a control section that allocates, based on the configuration, a plurality of CSI reference signal resource indicators (CRIs) and a plurality of values of a specific report quantity into the CSI report based on an order of the plurality of CRIs and report the CSI report, wherein
the plurality of values respectively correspond to the plurality of CRIs.

### {Supplementary Note 2}

The terminal according to supplementary note 1, wherein the control section allocates, for one CRI among the plurality of CRIs, one value corresponding to the one CRI among the plurality of values after the one CRI, and allocates the plurality of CRIs in ascending order of CRIs.

### {Supplementary Note 3}

The terminal according to supplementary note 1 or 2, wherein the control section allocates the plurality of CRIs in ascending order of CRIs, and allocates the plurality of values after the plurality of CRIs in ascending order of corresponding CRIs.

### {Supplementary Note 4}

The terminal according to any one of supplementary notes 1 to 3, wherein the control section allocates the plurality of CRIs and a plurality of values of a plurality of report quantities including the specific report quantity into the CSI report based on an order of the plurality of CRIs.

### (Supplementary Note)

Regarding one embodiment of the present disclosure, the following supplementary notes of the invention will be given.

### {Supplementary Note 1}

A terminal comprising:
a receiving section that receives a configuration of a channel state information (CSI) report indicating a plurality of channel measurement resources and one or more interference measurement resources; and
a control section that reports the CSI report including a plurality of CSI reference signal resource indicators (CRIs), based on the configuration.

### {Supplementary Note 2}

The terminal according to supplementary note 1, wherein
the one or more interference measurement resources are one interference measurement resource, and
the one interference measurement resource is associated with the plurality of channel measurement resources.

### {Supplementary Note 3}

The terminal according to supplementary note 1 or 2, wherein
the one or more interference measurement resources are a plurality of interference measurement resources, and
the plurality of interference measurement resources are respectively associated with the plurality of channel measurement resources.

### {Supplementary Note 4}

The terminal according to any one of supplementary notes 1 to 3, wherein the control section applies, to measurement of the one or more interference measurement resources, a quasi co-location (QCL) assumption that is the same as a QCL assumption of a corresponding channel measurement resource.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

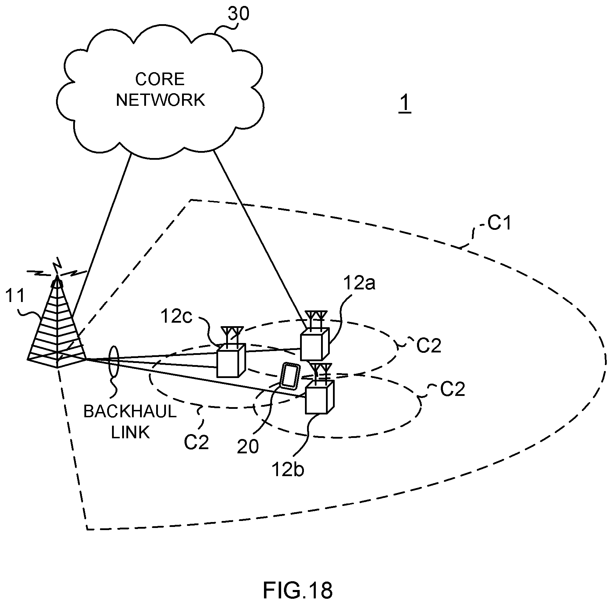

FIG. 18 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor", and the base station 12 corresponding to a relay station (relay) may be referred to as an "IAB node".

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform". Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment", "DL DCI", and so on, and DCI for scheduling the PUSCH may be referred to as "UL grant", "UL DCI", and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set". Note that a "search space", a "search space set", a "search space configuration", a "search space set configuration", a "CORESET", a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link". In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block", an "SS Block (SSB)", and so on. Note that an SS, an SSB, and so on may be referred to as a "reference signal".

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)".

### (Base Station)

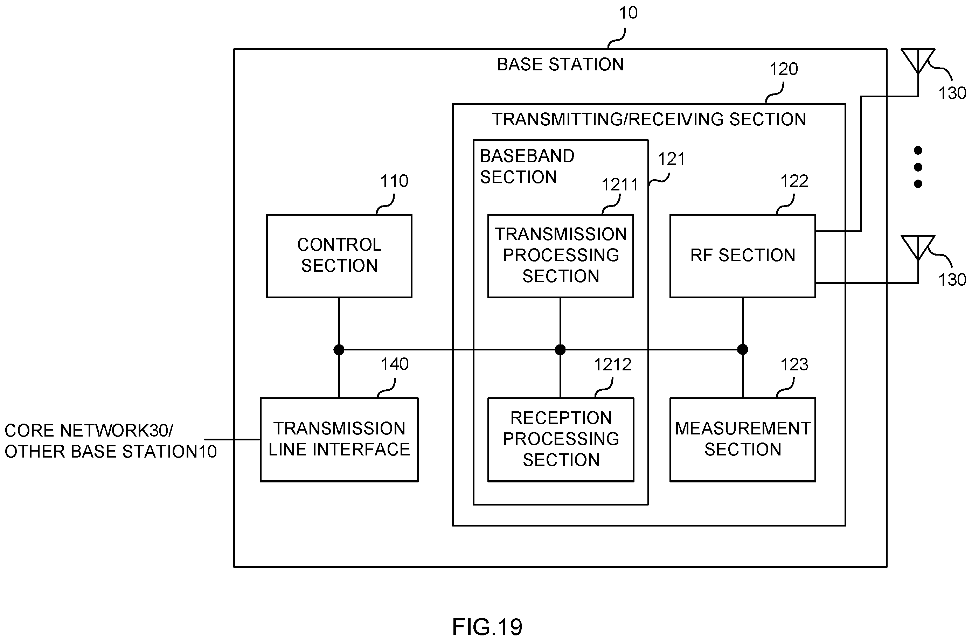

FIG. 19 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration of a channel state information (CSI) report using a specific codebook. The control section 110 may control reception of the CSI report including a plurality of CSI reference signal resource indicators (CRIs) and a plurality of values of a specific report quantity, based on the configuration. The plurality of values respectively correspond to the plurality of CRIs.

The transmitting/receiving section 120 may transmit a configuration of a channel state information (CSI) report. The control section 110 may control reception of the CSI report in which, based on the configuration, a plurality of CSI reference signal resource indicators (CRIs) and a plurality of values of a specific report quantity are allocated based on an order of the plurality of CRIs. The plurality of values respectively correspond to the plurality of CRIs.

The transmitting/receiving section 120 may transmit a configuration of a channel state information (CSI) report indicating a plurality of channel measurement resources and one or more interference measurement resources. The control section 110 may control reception of the CSI report including a plurality of CSI reference signal resource indicators (CRIs), based on the configuration.

### (User Terminal)

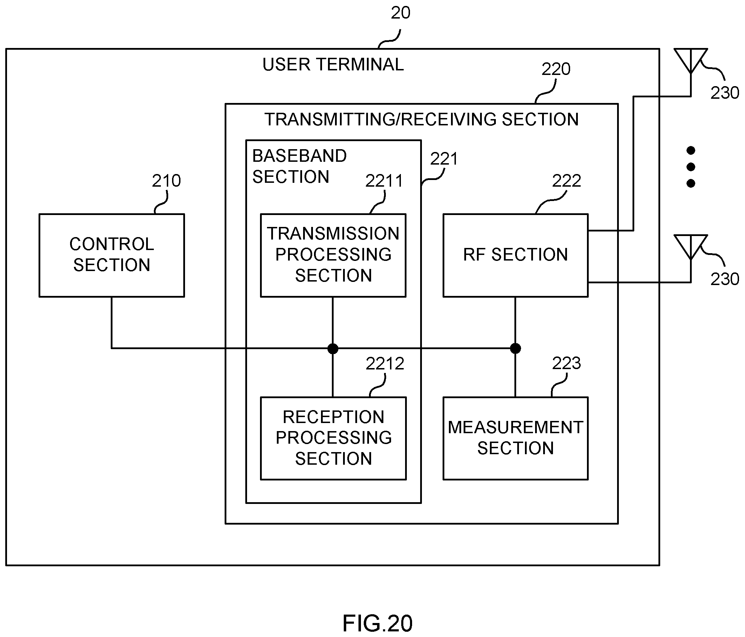

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a resource for channel measurement. The resource for channel measurement may be, for example, a non zero power (NZP) CSI-RS resource. The measurement section 223 may derive interference measurement for CSI computation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be used interchangeably as zero power (ZP) CSI-RS. Note that, in the present disclosure, the CSI-RS, the NZP CSI-RS, the ZP CSI-RS, the CSI-IM, a CSI-SSB, and the like may be used interchangeably.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a channel state information (CSI) report using a specific codebook. The control section 210 may report the CSI report including a plurality of CSI reference signal resource indicators (CRIs) and a plurality of values of a specific report quantity, based on the configuration. The plurality of values respectively correspond to the plurality of CRIs.

The configuration may indicate a plurality of CSI-reference signal (RS) resources using more than 32 ports.

The configuration may indicate at least one of a number of the plurality of CRIs, a maximum number of the plurality of CRIs, and enabling by the terminal to determine the number of the plurality of CRIs.

The configuration may indicate a plurality of CSI-RS resources. The control section 210 may select the plurality of CRIs from the plurality of CSI-RS resources.

The transmitting/receiving section 220 may receive configuration of a channel state information (CSI) report. The control section 210 may report the CSI report in which, based on the configuration, a plurality of CSI reference signal resource indicators (CRIs) and a plurality of values of a specific report quantity are allocated based on an order of the plurality of CRIs. The plurality of values respectively correspond to the plurality of CRIs.

The control section 210 may allocate, for one CRI among the plurality of CRIs, one value corresponding to the one CRI among the plurality of values after the one CRI, and allocate the plurality of CRIs in ascending order of CRIs.

The control section 210 may allocate the plurality of CRIs in ascending order of CRIs and allocates the plurality of values after the plurality of CRIs in ascending order of corresponding CRIs.

The control section 210 may allocate the plurality of CRIs and a plurality of values of a plurality of report quantities including the specific report quantity into the CSI report based on an order of the plurality of CRIs.

The transmitting/receiving section 220 may receive a configuration of a channel state information (CSI) report indicating a plurality of channel measurement resources and one or more interference measurement resources. The control section 210 may report the CSI report including a plurality of CSI reference signal resource indicators (CRIs), based on the configuration.

The one or more interference measurement resources may be one interference measurement resource. The one interference measurement resource may be associated with the plurality of channel measurement resources.

The one or more interference measurement resources may be a plurality of interference measurement resources. The plurality of interference measurement resources are respectively associated with the plurality of channel measurement resources.

The control section 210 may apply, to measurement of the one or more interference measurement a quasi co-location (QCL) assumption that is the same as a QCL assumption of a corresponding channel measurement resource.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

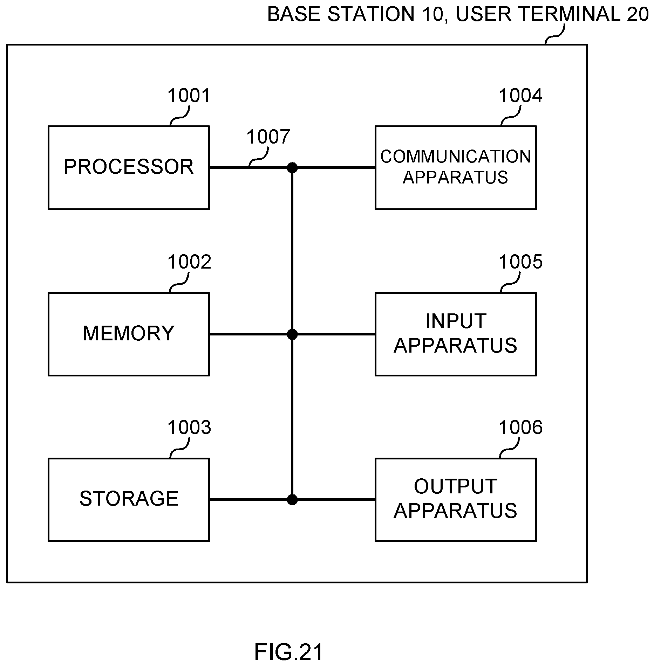

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station", a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be used interchangeably as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

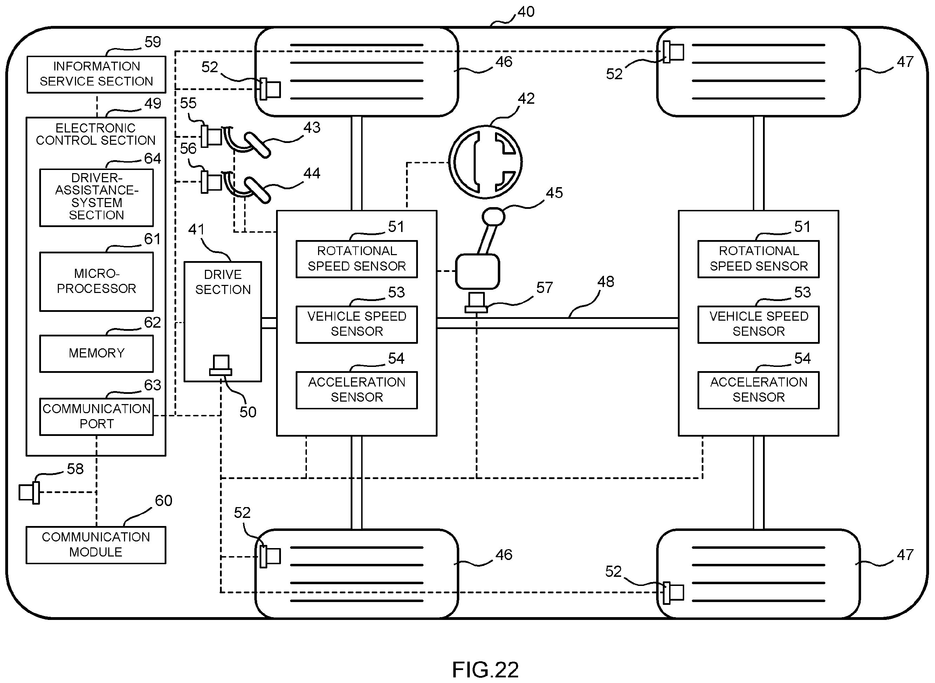

FIG. 22 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as drive information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a configuration of a channel state information (CSI) report indicating a plurality of channel measurement resources and one or more interference measurement resources; and
a control section that reports the CSI report including a plurality of CSI reference signal resource indicators (CRIs), based on the configuration.

2. The terminal according to claim 1, wherein
the one or more interference measurement resources are one interference measurement resource, and
the one interference measurement resource is associated with the plurality of channel measurement resources.

3. The terminal according to claim 1, wherein
the one or more interference measurement resources are a plurality of interference measurement resources, and
the plurality of interference measurement resources are respectively associated with the plurality of channel measurement resources.

4. The terminal according to claim 1, wherein
the control section applies, to measurement of the one or more interference measurement resources, a quasi co-location (QCL) assumption that is the same as a QCL assumption of a corresponding channel measurement resource.

5. A radio communication method for a terminal, the radio communication method comprising:
receiving a configuration of a channel state information (CSI) report indicating a plurality of channel measurement resources and one or more interference measurement resources; and
reporting the CSI report including a plurality of CSI reference signal resource indicators (CRIs), based on the configuration.

6. A base station comprising:
a transmitting section that transmits a configuration of a channel state information (CSI) report indicating a plurality of channel measurement resources and one or more interference measurement resources; and
a control section that controls reception of the CSI report including a plurality of CSI reference signal resource indicators (CRIs), based on the configuration.
